(19) **Europäisches Patentamt**

**European Patent Office**

**Office européen des brevets**

(11) **EP 1 205 404 B1**

(12) **EUROPÄISCHE PATENTSCHRIFT**

(45) Veröffentlichungstag und Bekanntmachung des Hinweises auf die Patenterteilung:
**13.08.2003  Patentblatt 2003/33**

(51) Int Cl.⁷: **B65F 1/14**, B65F 1/10, B65F 1/00

(21) Anmeldenummer: **01125819.1**

(22) Anmeldetag: **29.10.2001**

(54) **Wertstoffsammelsystem**

Collection system for recyclable products

Dispositif de collecte de produits recyclables

(84) Benannte Vertragsstaaten:
**AT BE CH CY DE DK ES FI FR GB GR IE IT LI LU MC NL PT SE TR**

(30) Priorität: **14.11.2000  DE 10056263**
**07.12.2000  DE 10061185**
**19.01.2001  DE 10102482**

(43) Veröffentlichungstag der Anmeldung:
**15.05.2002  Patentblatt 2002/20**

(60) Teilanmeldung:
**02026928.8 / 1 298 076**

(73) Patentinhaber:
• **Kohler, Roland**
**74722 Buchen (DE)**
• **Kohler, Konrad**
**74722 Buchen (DE)**

(72) Erfinder:
• **Kohler, Roland**
**74722 Buchen (DE)**
• **Kohler, Konrad**
**74722 Buchen (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
**DE-U- 8 806 095       DE-U- 9 013 728**
**DE-U- 29 801 702      FR-A- 2 711 703**
**GB-A- 2 290 039**

**Beschreibung**

Die vorliegende Erfindung betrifft ein Wertstoffsammelsystem gemäß dem Oberbegriff des Anspruchs 1.

Wertstoffsammelsysteme mit einem oder mehreren Sammelbehältnissen, wie sie in mehreren europäischen Patentanmeldungen, z.B. EP 0 252 437 A1, EP 0 608 767 A1 oder EP 0 768 250 A1, deutschen Patentanmeldungen, z.B. DE 197 58 570 A1 oder DE 197 21 284 A1, oder deutschen Gebrauchsmustern, z.B. DE 295 11 335 U1 oder DE 298 01 702 U1, vorgeschlagen werden, stellen gegenwärtig eine zeitgemäße und umweltgerechte Möglichkeit dar, verschiedenste wiederverwertbare Materialien zentral zu sammeln in der Absicht, sie möglichst in großem Umfang wieder in den Produktionskreislauf zurückzuführen.

Gerade im Zuge der Verknappung von Rohstoffen und unter den Aspekten des Umweltschutzes und der Energieverknappung auf zahlreichen Gebieten der chemisch-technischen Produktion gewinnt die Wiederverwertung von verbrauchten Endprodukten zunehmend an Bedeutung. Um die Verbraucher daher stärker als bisher dazu bewegen, verbrauchte Endprodukte durch Rückgabe an eine hierfür vorgesehene zentrale Wertstoffsammelstelle wieder in den Produktionskreislauf zurückzuführen, sind in jüngster Zeit verschiedene Diskussionen auf politischer Ebene im Gange, in denen Forderungen dahingehend laut werden, Verbrauchsprodukte, wie z.B. Dosen, Verpackungsmaterialien und dergleichen, aus wiederverwertbaren Materialien, wie z.B. PET, Aluminium, Weißblech, Glas und dergleichen, mit einem Pfand zu beaufschlagen.

Seit einiger Zeit gibt es zwar auch Rücknahmesysteme, die verschiedenste Verpackungsmaterialien, Dosen, Getränkebecher, Flaschen und dergleichen gegen Rückgabe eines zuvor über den Verkaufspreis erhobenen Pfandes zurücknehmen.

So werden z.B. von der Firma MRV Multi Reverse Vending GmbH Rücknahmeautomaten angeboten, die in der Lage sind, mehrere unterschiedliche Rücknahmegüter vom vielfältigen Bechertyp über Getränkedosen bis hin zu Mehrwegkreislaufund Einwegflaschen zu erkennen und auf jeweilige Sammelbehältnisse sortiert zurückzunehmen. Je nach den jeweiligen Anforderungen sind derartige Rücknahmeautomaten in verschiedenen Ausführungen und auf die individuellen Ansprüche abgestimmt erhältlich. Derartige Rücknahmeautomaten kommen z.B. in Supermärkten, Tankstellen, Freizeitparks, Schulen, Industrieunternehmen, Bahnhöfen, Flughäfen, Freizeiteinrichtungen etc., in Kombination mit Warenverkaufsautomatenstationen zum Einsatz, wodurch die Verbraucher die verbrauchte Ware unmittelbar nach deren Verbrauch wieder entsorgen können. Angeboten wird ferner ein als "PublicPoint" bezeichneter multimedialer Kommunikationspunkt, der neben Versorgungs- und Entsorgungsautomaten in Form eines Rücknahmeautomaten die Möglichkeiten bietet, Telefon, Fax, Internet und großflächige multimedial gestaltete Werbeflächen aufzunehmen. Im Hinblick auf den oftmals knappen Platz zum Aufstellen eines derartigen Rücknahmeautomaten innerhalb eines Gebäudes bzw. zum Unterbringen eines derartigen Rücknahmeautomaten in einem multimedialen Kommunikationspunkt sowie im Hinblick darauf, daß derartige Rücknahmeautomaten im allgemeinen nur in Kombination mit Warenverkaufsautomatenstationen zum Einsatz kommen, so daß nur ein begrenzter Personenkreis derartige Rücknahmeautomaten in Anspruch nimmt, haben derartige Rücknahmeautomaten dem Verwendungszweck entsprechend nur eine begrenzte Aufnahmekapazität für wiederverwertbare Wertstoffe.

Im bereits erwähnten deutschen Gebrauchsmuster DE 298 01 702 U1 wird in groben Zügen ein Wertstoff-Sammelbehältersystem mit einem mit den zu entsorgenden Wertstofffraktionen entsprechenden Sammelbehältern bestückten Bodenbehälter und einem oberhalb davon angeordneten Wertstoffrücknahmesystem vorgeschlagen, das beispielsweise für die Rücknahme von Einweg- und Mehrwegflaschen bzw. -becher oder -dosen ausgelegt sein kann.

Daneben zeigen die Schriften GB-A-2 290 039 und FR-A-2 711 703 Müllsammelsysteme, die speziell zum Einbau in mehrstöckigen Wohnanlagen angepasst sind. Entlang eines senkrechten Fallstrangs, der zu den im Keller angeordneten Mülltonnen führt, sind auf den Etagen des Gebäudes Einwürfe plaziert. Beim System nach GB-A-2 290 039 wird dabei die Müllmenge für jede Wohnung eines Gebäudes separat erfasst, indem der Müll jeweils in die der Wohnung zugeordnete Tonne gelenkt wird. Daneben ist dort an den Einwürfen noch eine zweite Einwurföffnung vorgesehen, durch die Wertstoffe eingeworfen werden können, die über ein separates Fallrohr in einen separaten Sammelbehälter geleitet werden. Das System nach FR-A-2 711 703 weist an den Mülleinwurföffnungen mehrere Fächer auf. Der eingeworfene Müll wird in Abhängigkeit davon, in welches Fach der Müll eingelegt wird, über ein Fallrohr in eine zugeordnete Mülltonne gelenkt.

Dokument DE-U-90 13 728 zeigt schließlich eine Entsorgungsanlage, die in einem Gehäuse untergebracht ist und versenkbare Schächte oberhalb einer Zwischenbodenebene des Gehäuses aufweist, an denen Wertstoffe eingegeben werden können. Die Wertstoffe werden an entsprechende Sammelbehälter weitergeleitet, welche unterhalb der Zwischenbodenebene angeordnet sind. Einerseits ist von mehreren versenkbaren Schächten die Rede, die zur Aufnahme unterschiedlicher Wertstofffraktionen dienen und jeweils mit einem dieser Fraktion zugeordneten Behälter in Verbindung stehen. Andererseits ist auch ein versenkbaren Schacht gezeigt, dem ein Magnetabscheider nachgeordnet ist, an dem die eingeworfenen, verschiedenen Wertstofffraktionen in magnetische und nichtmagnetische Materialien fraktioniert werden und über eine Fördereinrichtung an verschiedene Sammelbehälter verteilt werden.

Hiervon ausgehend hat die vorliegende Erfindung nun die Aufgabe, ein in technischer und funktioneller Hinsicht optimiertes Wertstoffsammelsystem bereitzustellen, das der Forderung nach einer umweltgerechten und kostengünstigen Rücknahme wiederverwertbarer Wertstoffe gerecht wird und auf das auch bestehende Rücknahmeautomaten der oben beschriebenen Art nachgerüstet werden können.

Diese Aufgabe wird bezüglich des Wertstoffsammelsystems durch die Merkmale des Anspruchs 1 gelöst, bezüglich des nachzurüstenden Rücknahmeautomaten durch die Merkmale des Anspruchs 21. Bevorzugte Weiterentwicklungen und Ausführungsformen sind Gegenstand der Unteransprüche.

Erfindungsgemäß sind die Einzelmodule des Wertstoffsammelsystems, das Wertstoffrücknahmesystem und zumindest ein Aufnahmebehälter, räumlich durch einen seitlichen Abstand getrennt und über ein Leitsystem miteinander verbunden.

Auf diese Weise gelingt es, den Funktionskomplex Wertstoffrücknahme und - Trennung vom Funktionskomplex Wertstoffzwischenspeicherung zu trennen. Es ist nicht mehr nötig, jedem einer Wertstofffraktion zugeordneten Sammelbehälter einen eigenen Rücknahmeautomaten zuzuordnen. Die Rückgabe der Wertstoffe kann also an einem einzigen Automaten erfolgen, wodurch Kosten gesenkt werden und eine bequemere Bedienung des Wertstoffsammelsystems erreicht wird. Trotzdem kann - abhängig von der Anzahl an Wertstofffraktionen, die der eingesetzte Rücknameautomat verarbeiten kann - eine beliebig grosse Anzahl von Wertstofffraktionen sortenrein entsorgt werden. Durch die Ausführung in Modulbauweise kann nicht nur ein leichterer Austausch von - evtl. defekten - Einzelmodulen gegen neue erreicht werden, ohne dass gleich an der Gesamtanlage umfangreiche Arbeiten erledigt werden müssten, sondern auch eine vereinfachte spätere Nachrüstung auf höhere Benutzerzahlen, grössere Wertstoffmengen oder mehrere Wertstofffraktionen.

Das erfindungsgemäße Wertstoffsammelsystem eignet sich somit für eine große Wertstoffaufnahmekapazität. Für ein solches, auf große Wertstoffaufnahmekapazität ausgelegtes Wertstoffsammelsystem, ist es vorteilhaft, wenn der Wertstoffzwischenspeichermodul (die Sammelbehälter) von der Wertstoffannahmestelle (der Rücknahmeautomat) weg ausgelagert wird.

Durch die erfindungsgemässe Entkopplung der Einzelmodule des Wertstoffsammelsystems können Rücknahmeautomat und Sammelbehälter an getrennten Orten angeordnet werden, die für die verschiedenen Funktionen von Rücknahmeautomat und Sammelbehälter am besten geeignet erscheinen:

Das erfindungsgemäße Wertstoffsammelsystem ist für die Anordnung der Rücknahmeautomaten an Orten geeignet, die von einem breiten Verbraucherpublikum aufgesucht werden, wie z.B. in Ladenpassagen oder an der Schaufensterfront eines Verkaufsgebäudes, aber nicht von schweren Transportfahrzeugen zum Zweck der Entleerung, Wartung etc. angefahren werden können, bzw. an denen kein Platz für Sammelbehälter verschwendet werden soll oder die nicht durch den unattraktiven Anblick von Wertstoffzwischenlagern oder schlechte Gerüche entwertet werden sollen.

Andererseits können die voluminösen Sammelbehälter an Orten befindlich sein, die für das Verbraucherpublikum wenig attraktiv und damit kostengünstig sind, aber über geeignete Zufahrtsmöglichkeiten verfügen, um die Entleerung oder Wartung der Sammelbehälter zu ermöglichen, ohne eine Beeinträchtigung der Kundschaft durch Lärm, Abgas u.ä. mit sich zu bringen. Denkbar wäre beispielsweise eine Anordnung der Sammelbehälter in einem Hof mit Zufahrt auf der Rückseite eines Verkaufsgebäudes.

Das Sammelsystem lässt sich auf vereinfachte Weise warten, so können beispielsweise die Sammelbehälter je nach dem jeweiligen Befüllungsgrad geleert werden. Durch die Trennung der Rücknahme von der Lagerung der Wertstoffe kann ausserdem gewährleistet werden, das die oft in Wertstoffrücknahmesystemen eingesetzten elektronischen Bauteile, die kurze Wartungsintervalle und eine sichere, bzw. ortsfeste Lagerung und pfleglichen Umgang erfordern, nicht durch die bei der Leerung der Sammelbehälter nötige Öffnung der Deckel und andere evtl. zu verrichtende gröbere Arbeiten zu Schaden kommen und deshalb ausgetauscht oder neukalibriert werden müssen. Leerungen oder Reparaturen am Aufnahmebehälter, bzw. Sammelbehälter sind andererseits ohne Rücksichtnahme auf die Empfindlichkeit des Rücknahmesystems möglich.

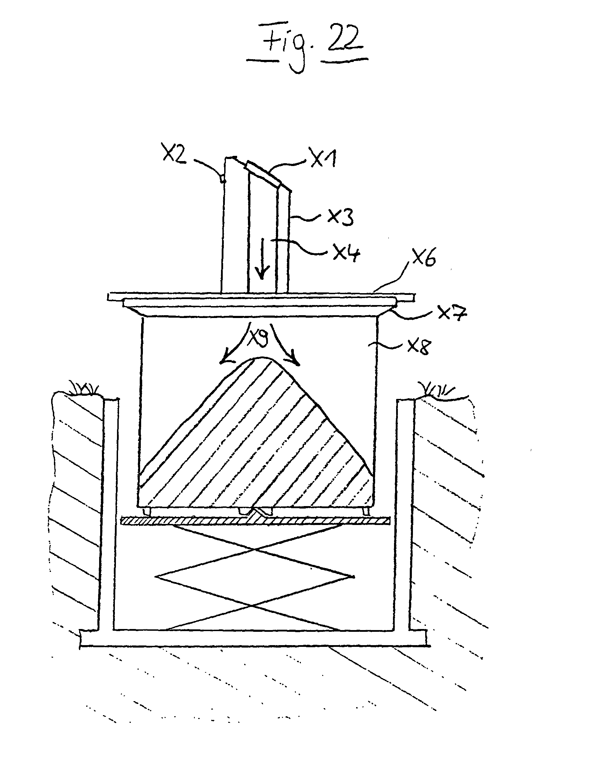

Die Erfindung ist hierbei nicht auf einen einzigen Aufnahmebehälter beschränkt. Es können auch mehrere Aufnahmebehälter, die jeweils über das Leitsystem mit dem Rücknahmeautomaten verbunden sind, vorgesehen werden. Jeder Aufnahmebehälter kann dabei einen oder mehrere Sammelbehälter aufnehmen, so dass sich das Gesamtsystem nicht nur ganz entsprechend der örtlichen Gegebenheiten modularisieren lässt, sondern auch handelsübliche Aufnahmebehälter/Sammelbehälter-Einheiten, die pro Aufnahmebehälter jeweils einen Sammelbehälter aufweisen, verwendet werden können, was einer Kostensenkung gleichkommt. Als Beispiel dazu ist eine aus einem Verkaufsprospekt der Firmen Villiger und Paul Wolff bekannte Aufnahmebehälter-Sammelbehälter-Einheit in der Figur 22 gezeigt. Dadurch lassen sich auch verteilte Aufstellungsorte der Aufnahmebehälter realisieren, wodurch das Gesamtsystem für noch grössere Umschlagsmengen geeignet erscheinen lässt. Entleerungszyklen können somit weiter verlängert werden. Auch hinsichtlich einer nachträglichen Erweiterung eines solchen Systems bestehen gegenüber bekannten Lösungen erhebliche Vorteile, da bestehende Aufnahmebehälter nicht ersetzt werden müssen, sondern lediglich weitere Aufnahmebehälter an den Rücknahmeautomaten angeschlossen werden müssen.

Im Rahmen der Erfindung ist es ebenfalls möglich, nur einen Aufnahmebehälter mit einem enthaltenen Sammelbehälter vorzusehen, wenn an einem Wertstoffrücknahmesystem nur eine Wertstofffraktion sortenrein gesammelt werden soll.

Durch Einteilung des Wertstoffsammelsystems in Einzelmodule, ist es möglich, beim Aufbau des Systems flexibel auf die jeweils am Einsatzort anzutreffenden Gegebenheiten zu reagieren.

Beispielsweise kann ein Wertstoffsammelsystem, das die Rücknahme von Glas, Aluminiumverpackungen und PET vorsieht, so gestaltet sein, dass der Glasaufnahmebehälter grösser als die beiden anderen ausgeführt ist, ohne das die anderen Systemmodule dadurch beeinträchtigt wären.

Bestehende Wertstoffannahmestellen sind ausserdem oft an Orten gelegen, die ein beengtes Platzangebot aufweisen oder an denen ein grossvolumige Wertstoffsammeleinheit aus anderen Gründen störend wäre.

Um ein auf große Wertstoffaufnahmekapazität ausgelegtes Wertstoffsammelsystem mit Wertstoffannahmestellen an den genannten Orten zu betreiben, ist es deshalb, wie schon obenstehend erwähnt, vorteilhaft, wenn nicht sogar notwendig, wenn der Wertstoffspeicher von der Wertstoffannahmestelle weg ausgelagert wird. Das Aufnahmevermögen der Aufnahmebehälter gegenüber herkömmlichen Systemen kann somit um ein Vielfaches vergrößert werden, wodurch sich die Entleerungszyklen erheblich verlängern lassen, was einer Kostenreduzierung gleichkommt.

Es ist weiterhin auch im Nachhinein noch mit relativ geringem Aufwand möglich auf sich ändernde oder fehleingeschätzte Betriebsparameter zu reagieren. So kann durch ein Ablesen der jeweiligen Befüllungsmengen oder eine Speicherung und anschliessende Auswertung der Erkennungssensordaten die Behältergrösse der Nutzung angepasst werden.

Im Hinblick auf eine unterirdische Installation sind der/die Aufnahmebehälter gemäß Anspruch 4 bevorzugt als Bodenbehälter ausgeführt. Diese Anordnung erlaubt zum Einen eine einfache Ausbildung der Deckelkonstruktion und zum Anderen eine möglichst unauffällige Einbindung in die umgebende Fläche, wobei lediglich der Rücknahmeautomat sichtbar bleibt und sich dieser ohne größere Anstrengungen ästhetisch und harmonisch in das jeweilige Umfeld einfügen läßt. Durch einen festen und dauerhaften Einbau von Aufnahmebehältern in den Boden läßt sich insbesondere erreichen, daß städtebauliche Maßnahmen in stärkeren Maße berücksichtigt werden können, da größere Wertstoffsammelsysteme plaziert werden können, ohne viel Platz zu beanspruchen. Für den unterirdischen Einbau empfiehlt es sich daher, den/die Aufnahmebehälter gemäß Anspruch 5 so einzubauen, daß die Deckelkonstruktion im wesentlichen auf Höhe der Bodenoberfläche liegt. Der/die Aufnahmebehälter können außenseitig mittels einer Stützstruktur verstärkt sein. Da eine außenseitige Stützstruktur jedoch Nischen und dergleichen aufweist, in denen sich Schmutz und Feuchtigkeit halten kann, wodurch Korrosion verursacht werden könnte, weist er vorzugsweise innenseitig eine Stützstruktur und außenseitig eine Korrosionsschutzbeschichtung und/oder -lackierung auf.Um den ästhetischen Gesamteindruck nicht zu stören und um das vorhandene Platzangebot nicht zu beschränken, empfiehlt sich darüber hinaus gemäß Anspruch 6 der Einbau des Leitsystems unterhalb der Erdoberfläche.

Ist die Deckelkonstruktion jedes Aufnahmebehälters aus zwei Deckeln gebildet, die an einander gegenüberliegenden Seitenwandungen des Aufnahmebehälters angelenkt sind, so wird insbesondere bei einem nach oben zu öffnenden Aufnahmebehälter erreicht, daß sich der Hebel zum Öffnen der Deckelkonstruktion verringert, was einen geringeren Energieaufwand erforderlich macht. Bevorzugt ist der Aufnahmebehälter in der Form eines nach oben offenen Quaders ausgebildet, und sind rechteckförmige Deckel jeweils an einer der längeren Seitenwandungen des Aufnahmebehälters angelenkt.

Vorzugsweise liegt die Deckelkonstruktion über eine umlaufende Dichtung, z.B. eine Gummidichtung, auf der oberen Stirnseite der Seitenwandung des Aufnahmebehälters auf, so daß die Deckelkonstruktion den Aufnahmebehälter nach oben hin luftdicht abschließen kann. Ist die Deckelkonstruktion aus zwei Deckeln gebildet, so hat es sich als vorteilhaft erwiesen, wenn die Deckel im Bereich der Stoßlinie einander überlappen und z.B. mittels einer Gummidichtung gegeneinander abgedichtet sind. Die Abdichtung dient auch dazu, den Eintritt von Wasser und Schmutz in den Aufnahmebehälter zu verhindern, wodurch sich ein häufiges Reinigen des Aufnahmebälters vermeiden läßt.

Es hat sich als besonders vorteilhaft erwiesen, wenn die Deckelkonstruktion innenseitig mittels einer gitterartigen Stützstruktur verstärkt ist.

Des Weiteren ist ein Rücknahmeautomat besonders gut zugänglich, wenn er gemäß Anspruch 7 oberhalb der Deckel der im Boden eingebauten Aufnahmebehälter angeordnet ist. Zusätzlich lässt sich auf diese Weise die Schwerkraft für die Beförderung der eingeworfenen Wertstoffe nutzen.

Wenn dabei in der ersten Ausgestaltung des Wertstoffsammelsystems der Rücknahmeautomat in die Deckelkonstruktion integriert ist, kann eine einfache Einbindung des Rücknahmesystems in das Wertstoffsammelsystem erreicht werden, da die Förderwege kurz sind und andererseits mit dem Öffnen der Deckelkonstruktion automatisch ein unbehinderter Zugang zu den im Aufnahmebehälter gesammelten Wertstoffen gewährleistet werden.

Vorteilhafter Weise ist der Rücknahmeautomat in der ersten Ausgestaltung des Wertstoffsammelsystems im wesentlich zentral an der Oberfläche der Deckelkonstruktion angeordnet. Die das Leitsystem bildenden Fördereinrichtungen, insbesondere Förderbänder, aber auch Förderschächte oder dergleichen, erstrecken sich dann vom Zentrum des Aufnahmebehälters ausgehend zu den jeweiligen Sammelbehältnissen. Durch die zentrale Anordnung des Rücknahmeautomaten lassen sich die Förderwege weiter verkürzen. Die Förderbänder sind vorzugsweise so ausgerichtet, daß sie die zu transportierenden Wertstoffe in die Mitte des jeweiligen Sammelbehältnisses zuführen. Hierdurch läßt sich ein gleichmäßiger Schüttkegel erzielen, der zu einer höchstmöglichen Aufnahmekapazität der jeweiligen Sammelbehältnisse und damit des Aufnahmebehälters insgesamt beiträgt.

Der Rücknahmeautomat kann sich vorteilhaft in einem Gebäude befinden. Sowohl Personen bei der Wertstoffrückgabe als auch der Automat selbst sind auf diese Weise vor Witterungseinflüssen geschützt. Der Rücknahmeautomat kann so in hochfrequentierte Einrichtungen wie Einkaufszentren u.ä. integriert werden, während der Behälter dort keinen Platz verschwendet.

Gemäß Anspruch 2 ist das Wertstoffsammelsystem mit mehreren Rücknahmeautomaten, die den Behälter beschicken, ausgerüstet.

Besonders vorteilhaft ist es dabei, dass auf grossflächigen Arealen, beispielsweise in Einkaufszentren an verschiedenen Orten ein Rücknahmeautomat verfügbar ist, der nicht belegt ist, wodurch die Akzeptanz beim Publikum und die Wiederverwertungsquote erhöht wird. Es ist im Hinblick auf eine sortenreine Trennung von Materialien auch möglich, für verschiedene Sorten verschiedene Rücknahmeautomaten vorzusehen.

Die Modulbauweise erlaubt es somit, die entsprechende Anlage für jeden Standort in Bezug auf vorraussichtliche Nutzerzahlen, Anzahl der einzeln zu sammelnden Wertstofffraktionen und deren Losgrössen hin zu optimieren.

Diese Optimierung wird sich dabei zwischen den beiden Polen billige und einfache Auslegung der Anlage für niederfrequentierte Anlagen mit wenigen zu sammelnden Wertstofffraktionen und komplexe und teure Auslegung der Anlage für hochfrequentierte Anlagen mit vielen zu sammelnden Wertstofffraktionen bewegen.

Dabei sind für die erreichbare Durchsatzmenge an Wertstoffen Parameter wie die Anzahl gleichzeitig ausführbarer Einwürfe, gleichzeitig ausführbarer Einwürfe von Wertstoffen der gleichen Fraktion, gleichzeitig ausführbarer Einwürfe unterschiedlicher Wertstoffe usw. entscheidend.

Diese Parameter hängen sowohl von der Anzahl an Benutzerbedieneinheiten, bzw. -oberflächen (von hier an mit BBE abgekürzt) ab, die nachfolgend beschrieben werden, als auch wesentlich von der internen Vernetzung der BBEs mit den Sammelbehältern und der Leistungsfähigkeit und damit der Bearbeitungsdauer eines eingesetzten Erkennungs- und Selektiersystems (von hier an kurz EuS genannt), was ebenfalls nachstehend beschrieben wird. Je aufwendiger diese Elemente allerdings ausgeführt werden, umso stärker steigt auch der Preis der Anlage.

Zur Bedienung durch das Verkehrspublikum weist das erfindungsgemässe Wertstoffsammelsystem am Rücknahmeautomat dabei gemäß Anspruch 3 zumindest eine Benutzerbedieneinheit, beispielsweise in Form einer Wandplatte mit Einwurföffnung, Pfandentnahmeöffnung, Rückgabekammer für fehleingelegtes Gut, Zustandsanzeige usw., auf.

Über eine in jede Benutzerbedieneinheit integrierte, zumindest eine Annahmeeinrichtung, beispielsweise einen Einwurfschacht oder eine Einlegekammer, werden die eingeworfenen, bzw. eingelegten Wertstoffe einem untenstehend beschriebenen Erkennungs- und Selektionssystem zugeführt, von dem aus die sortenrein selektierten Wertstoffe über das Leitsystem zu dem Wertstoffsammelbehälter geleitet werden.

Falls bei einer Kontrolle des Nutzungsverhalten der Verbraucher eine hohe Frequentierung oder gar Warteschlangen festgestellt werden, kann das erfindungsgemässe Wertstoffsammelsystem durch Einbau von zusätzlichen Benutzerbedieneinheiten, bzw. -feldern einer aufwendigeren internen Verknüpfung der Sammelbehälter mit den Benutzerbedienfeldern, d.h. einem aufwendigeren Erkennungs- und Selektionssystem, bzw. Leitsystem, nachgerüstet werden und somit auf die Anzahl von Benutzern flexibel reagiert werden, ohne die Gesamtanlage erneuern zu müssen.

Eine sortenreine Verteilung der über den Rücknahmeautomaten aufgenommenen Wertstoffe läßt sich in vorteilhafter Weise dadurch bewerkstelligen, daß das Wertstoffrücknahmesystem gemäß Anspruch 8 ein Erkennungsund Selektiersystem aufweist.

Dieses Erkennungs- und Selektiersystem kann beispielsweise in Form von mehreren, an den Benutzerbedieneinheiten angebotenen, den verschiedenartigen Wertstoffen zugeordneten Einwurfschächte realisiert sein, dessen Ausgänge über ein Schachtsystem dem Leitsystem die aufgenommenen Wertstoffe zuführen.

Bevorzugt weist das Wertstoffrücknahmesystem jedoch ein elektronisches Erkennungs- und Selektiersystem zum automatischen Erkennen und sortenreinen Selektieren der über ein und dieselbe Einwurföffnung aufgenommenen, verschiedenartigen Wertstoffe auf.

Bevorzugt weist das zwischengeschaltete Erkennungs- und Selektiersystem, zumindest einen Eingang auf, von dem aus die an der/den Annahmeeinrichtungen eingeworfenen Wertstoffe einer Wertstoffidentifizierung zugeführt werden, die von einer Wertstoffidentifiziereinrichtung durchgeführt wird. Entsprechend den von der Wertstoffidentifizierungseinrichtung gemeldeten Signalen werden die identifizierten Wertstoffe durch eine Selektierund Verteileinrichtung über zumindest einen entsprechenden Ausgang, bzw. Ausgangsfallschacht oder Ausgabeeinrichtung und das anschliessende Leitsystem sortenrein den entsprechenden Sammelbehältern zugeführt.

Die Wertstoffidentifiziereinrichtung kann dabei beispielsweise einen oder mehrere opto-elektronische, elektromagnetische, laserstrahlende, gewichtmessende, formabtastende, barcodelesende oder volumenabtastende Sensoren o.ä. umfassen.

Die Verteileinrichtung kann entsprechend den Daten der Erkennungssensoren, die durch die Steuerung des Erkennungsund Selektiersystem zu Steuerbefehlen weiterverarbeitet werden, angesteuert werden.

Sie kann als Greifarmanordnung, Förderschneckenanordnung, Klappen- oder Schiebermechanismus und/ oder Förderbandanordnung realisiert sein oder in einen anderen Teil des Sammelsystems integriert sein.

Als Steuerung des Erkennungs- und Selektiersystems (EuS) kann ein handelsüblicher Chip, auf dem ein Rechnersystem mit CPU, RAM und ROM eingebettet ist, und der entsprechenden Steuerprogrammsoftware dienen. Gemäß Anspruch 15 ist die Steuerung des EuS in eine elektronischen Steuerungseinheit (ECU) integriert. Diese ist vorzugsweise über eine z.B. am Rücknahmeautomaten vorgesehene Programmtastatur- und Anzeigevorrichtung programmierbar und steuert durch eine Rückkopplung mit den einzelnen Anlagenteilen das erfindungsgemäße Wertstoffsammelsystem. Durch eine derartige elektronische Steuerungseinheit kann eine Überwachung und gegebenenfalls ein automatischer, korrigierender Eingriff in den Betrieb der im erfindungsgemäßen Wertstoffsammelsysteme durchgeführt werden. Des Weiteren bietet eine derartige elektronische Steuerungseinheit die Möglichkeit der Ankopplung des erfindungsgemäßen Wertstoffsammelsystems an eine zentrale Wertstoffsammelsystem-Überwachungsstation zum Zweck, der Anzeige von Defekten der einzelnen im Wertstoffsammelsystem integrierten funktionellen Systeme wie auch zur Anzeige des Füllgrads der einzelnen Sammelbehältnissen bzw. des Aufnahmebehälters insgesamt.

Zur Rückgabe von falsch eingelegten Wertstoffen weist das EuS bevorzugt eine Rückgabeeinrichtung, bzw. -band oder -schacht auf. Auf diese Weise kann einer Verunreinigung der sortenrein gesammelten Wertstoffe in den Sammelbehältern und weiterer unerwünschten Nebeneffekte, wie z.B. einem Verstopfen des weiteren Systems vorgebeugt werden. Es ist auch vorstellbar, falls in einer zusätzlichen Pfandrückgabeeinrichtung das Geld ausgeht, eingeworfenen Güter auf diesem Wege wieder auszugeben.

Anschliessend an das Erkennungs- und Selektionssystem nimmt das Leitsystem die Verteilung der sortenrein sortierten Wertstoffe auf die vorgesehenen Wertstoffsammelbehälter vor.

Das erfindungsgemäße Wertstoffsammelsystem bietet sich in Kombination mit dem Wertstoffrücknahmesystem dazu an, Wertstoffe verschiedenartiger Materialien, z.B. aus Weißblech, Aluminium oder PET, sortenrein zu sammeln. Hierzu weist das Wertstoffrücknahmesystem das wenigstens im geschlossenen Zustand des zumindest einen Aufnahmebehälters mit dem Rücknahmeautomaten verbundene Leitsystem zum sortenreinen Verteilen der verschiedenen Wertstoff-Fraktionen auf jeweilige Sammelbehälter auf. Beispielsweise können dazu drei transportable Sammelbehälter zum Sammeln von Wertstoff-Fraktionen, z.B. Weißblech, Aluminium und PET, in einer Reihe beabstandet, hintereinander in einem der Aufnahmebehälter vorgesehen sein.

Hierzu kann im Leitsystem ein Erfassungssystem, z.B. eine optoelektronische Erfassungseinrichtung, vorgesehen sein, so daß es mit der Erfassung eines Wertstoffs automatisch in Gang gesetzt wird, um den Wertstoff dem jeweiligen Sammelbehälter zuzuführen. Zweckmässiger Weise wird aber die Steuerung des Leitsystems in die Steuerung des Erkennungs- und Selektiersystems integriert.

Als Leitsystem kommt gemäß Anspruch 9 eine Förderbandanordnung zum Einsatz, die ausgehend vom Rücknahmeautomaten zu den gewünschten Einwurfstellen der jeweiligen Sammelbehälter führt.

Diese Förderbandanordnung kann dabei aus mehreren Transportbändern, bzw. Transportbandstrecken gebildet sein. Die Anordnung der Förderbänder wird dabei in erster Linie von der Anzahl und Anordnung der in den Aufnahmebehältern vorgesehenen Sammelbehältnissen sowie Anzahl und Art der Erkennungs- und Selektiersysteme bestimmt.

Die Verteilung der verschiedenen Wertstoff-Fraktionen auf die jeweiligen Sammelbehältnisse eines Aufnahmebehälters erfolgt dann über verschieden lange Transportbänder die zum Aufnahmebehälter und anschliessend zum jeweiligen Sammelbehälter führen, die nebeneinander angeordnet sein können.

Gemäß Anspruch 10 erfolgt der sortenreine Transport des Sammelgutes zu den jeweiligen Sammelbehältnissen eines Aufnahmebehälters aber über ein Förderband erfolgen, wobei für jede Fraktion ein Abschnitt einer entsprechenden Breite des Förderbandes vorgesehen ist und nach einer Lauflänge, die der Entfernung des jeweiligen gewünschten Einwurfpunktes vom Behälterrand entspricht, unter einem Winkel zur Laufrichtung des Bandes angeordnete Leitanschläge, bzw. Umlenkbalken, das Sammelgut in die entsprechend vorgesehenen Sammelbehälter lenkt.

Gemäß Anspruch 11 ist dabei ein Abschnitt des Leitsystems in den jeweiligen Aufnahmebehälter, vorzugsweise in dessen Deckelkonstruktion als ein weiteres Fördersystem integriert, was besonders bei Aufnahmebehältern mit mehreren Sammelbehältern vorteilhaft ist.

Dabei wäre es ausserdem vorstellbar, dass eine Selektion oder Nachselektion der ankommen Materialien erst an dieser Stelle erfolgt. Beispielsweise könnte durch ein Rütteln der Förderbänder schwere von leichten Fraktionen getrennt werden.

Die Spitze des Schüttkegels des in die Sammelbehälter einzubringende Schüttguts sollte - um eine ungleichmässige Befüllung zu vermeiden und den vorhandenen Stauraum optimal zu nutzen - in der Mitte des Sammelbehälters sein oder alternativ dazu veränderlich einstellbar sein. Als konkurrierendes Ziel darf die Förderanordnung das Öffnen der Behälterdeckel und den Abtransport der herausnehmbaren Innenbehälter nicht behindern.

Durch einen oben erwähnten, behälterinegrierten Fördersystemabschnitt kann diesen Anforderungen entsprochen werden. Eine weitere denkbare Lösung wären schwenkbare oder ein- und ausziehbare Förderbänder.

Als Fördersystem kann z.B. eine Förderbandanordnung gebildet aus mehreren Förderbändern verwendet werden, die ausgehend vom Behälterrand des jeweiligen Aufnahmebehälters zu den jeweiligen Sammelbehältern führen. Die Anordnung der Förderbänder wird dabei in erster Linie von der Anzahl und Anordnung der in diesem Aufnahmebehälter vorgesehenen Sammelbehälter bestimmt.

Der Antrieb des Fördersystems, d.h. z.B. der Förderbandanordnung, erfolgt vorzugsweise elektromotorisch, z.B. durch einen an die vorstehend erwähnte Erfassungsvorrichtung gekoppelten Schrittmotor.

Wenn das Fördersystem gemäß Anspruch 12 in die Stützstruktur der Deckelkostruktion integriert ist, ist auch im geöffneten Zustand der Deckelkonstruktion, z.B. während des Entleerens des Aufnahmebehälters, ein optimalen Schutz des Fördersystems vor Beschädigungen gewährleistet.

Ein gemäß Anspruch 16 zusätzlich vorgesehenes Pfanderstattungssystem trägt erheblich dazu bei, die Motivation der Verbraucher zur Rückgabe verbrauchter, wiederverwertbarer Produkte und Materialien zu erhöhen. Die Pfanderstattung kann in Form der Ausgabe von Geld oder eines Wertscheins, oder in Form der Aufwertung einer Kreditkarte erfolgen.

Darüber hinaus kann das Wertstoffrücknahmesystem ein Volumenreduzierungssystem, z.B. in Form eines Preßmoduls, eines Schredders oder - sofern dies zweckmäßig und technisch möglich ist - einer Stapelvorrichtung, aufweisen, um das Volumen der aufgenommenen Wertstoffe zu reduzieren und dadurch eine hohe Aufnahmekapazität zu erhalten.

Das Volumenreduzierungssystem kann dabei gleichzeitig als Entwertungseinrichtung dienen, mit der pfandpflichtige Güter durch Zerstörung entwertet werden können. Bevorzugt wird dabei gemäss Anspruch 18 eine Entwertungseinrichtung am Ende der gesamten Förderstrecke, d.h. an der Stelle, an der die Wertstoffe in die jeweiligen Sammelbehälter übergeben werden, angeordnet, da auf diese Weise eine Verschmutzung des Rücknahmeautomaten, bzw. der dort integrierten empfindlichen Elektronik des Wertstofferkennungs- und Selektiersystems durch auslaufende Flüssigkeiten oder herumfliegende Splitter vermieden werden kann.

Vorteilhafterweise weist das in den Aufnahmebehälter integrierte Wertstoffrücknahmesystem ausserdem ein Füllgradfeststellungssystem zum Feststellen des jeweiligen Füllgrads der einzelnen Sammelbehälter auf.

Die vorstehend erwähnten Systeme, wie das Verteilersystem, das Fördersystem, das Erfassungssystem, das Erkennungs- und Selektiersystem, das Volumenreduzierungssystem, das Pfanderstattungssystem und das Füllgradfeststellungssystem, wie auch ein nachstehend erwähntes Antriebssystem zum Antrieb der Deckelkonstruktion stehen vorzugsweise mit der oben beschriebenen ECU in Verbindung.

die Aufnahmebehälter des erfindungsgemäßen Wertstoffsammelsystems weisen ferner gemäß Anspruch 14 vorzugsweise ein z.B. elektromotorisch, hydraulisch, elektrohydraulisch, elektropneumatisch etc. betriebenes Antriebssystem zum Öffnen und Schließen der Deckelkonstruktion auf. Dieses Antriebssystem kann mit einer im Wertstoffrücknahmesystem integrierten und den Betrieb des Wertstoffsammelsystems steuernden elektronischen Steuerungseinheit in Verbindung stehen, die beim Öffnen der Deckelkonstruktion, d.h. bei der Betätigung des Antriebssystems, die im Wertstoffsammelsystem integrierten Funktionssysteme abschaltet, um dadurch Energie zu sparen und einen Eingriff in laufende Funktionssysteme zu verhindern.

Der einfachste Fall des vorgeschlagenen Wertstoffsammelsystems stellt ein System dar, das einen Rücknahmeautomaten mit einer BBE mit einem Sammelbehälter verknüpft, der in einem Aufnahmebehälter eingestellt ist.

Diese Lösung stellt eine kostengünstige Variante dar, im EuS muss nicht auf getrennt zu sammelnde Wertstoffe hin abgeprüft werden. Auch die interne Vernetzung der Annahmeeinrichtung, bzw. dem Einwurf, des EuS und des Leitsystems und der Sammelbehälter, kann entsprechend einfach gelöst werden, d. h. das EuS weist einen Eingang, beispielsweise in Form eines Fallschachts oder Zulieferbandes, einen gemäss der einfachen Funktionsweise einfachen und billigen Erkennungssensor, eine Steuereinrichtung, die nur auf richtigen oder falschen Einwurf prüfen muss, einen Ausgang, bzw. Ausgangsschacht oder Ausgangsband für als richtig eingeworfen eingestufte Wertstoffe und einen Ausgang für als falsch eingeworfen eingestufte Wertstoffe umfassen.

Eine Anlage mit einem Sammelbehälter, der von mehreren BBEs beschickt wird, ist für höhere Benutzerzahlen geeignet. Die interne Vernetzung kann dabei entsprechend der folgenden Varianten erfolgen:

1.) Mit n Eingängen, bzw. Eingangsöffnungen, die von den n Annahmeeinrichtungen kommen und zu einer gemeinsamen Erkennungseinrichtung führen, die über einen Rückgabeausgang für falsch eingeworfene Stoffe Fehleinwürfe zurückgibt und über einen Ausgang zum Leitsystem hin und ein einfaches Leitsystem, z.B. ein Förderband, den Sammelbehälter mit der einen Wertstofffraktion beschickt.

2.) Mit n Eingängen, bzw. Eingangsöffnungen, die von den n Annahmeeinrichtungen kommen und zu jeweils einer eigenen Erkennungseinrichtung führen und über jeweils einen zugeordneten Rückgabeausgang für falsch eingeworfene Stoffe Fehleinwürfe zurückgeben sowie über jeweils einen zugeordneten Ausgang zum Leitsystem hin und ein einfaches Leitsystem, z.B. einen Fallschacht, den Sammelbehälter mit der einen Wertstofffraktion beschicken.

Mit beiden Varianten ist es offensichtlich ohne weiteres möglich, ein System mit nur einer Benutzerbedieneinheit auf höhere Besucherzahlen aufzurüsten.

Variante 1 bietet den Vorteil, dass nur eine zentrale Identifizierungseinrichtung, bzw. ein zentraler Identifizierungssensor und eine entsprechende Selektiereinrichtung eingebaut werden muss. Dadurch kann ein relativ billiger Aufbau gewährleistet werden.

Mit separaten Identifizierungssensoren, denen jeweils eine Selektiereinrichtung zugeordnet ist, kann die Durchsatzkapazität der Anlage erhöht werden, da bei gleichzeitigem Einwurf an mehreren BBEs die Wertstoffe gleichzeitig weiterbearbeitet werden.

Dabei können die Identifizierungssensoren direkt an die Annahmeeinrichtung angegliedert bzw. im diese integriert sein, so dass eine Zwischenvernetzung, bzw. -verrohrung entfallen kann. Zusätzlich kann eine Rückgabe ungültig eingeworfener Stoffe einfach dadurch erfordern, dass der Verbraucher - z.B. mittels eines blinkenden LEDs auf der BBE - dazu aufgefordert wird, den Gegenstand wieder zu entnehmen. Auf diese Weise kann der Rückgabeausgang, -bzw. -ausgangsschacht oder -band eingespart werden.

Während die vorstehend genannte Ausführungsform es hohen Nutzerzahlen gleichzeitig ermöglicht, einen Wertstoff einer Fraktion zu entsorgen, kann in einer alternativen Ausführungsform über eine BBE jeweils ein Nutzer verschiedene Sammelbehälter sortenrein mit Wertstoffen verschiedener Fraktionen beschicken. Dabei bewerkstelligt das EuS eine Erkennung, Selektion und Verteilung der entsorgten Wertstoffe und weist Sensoren zur Erkennung jeder anzunehmenden Wertstofffraktion auf.

Diese Anordnung eignet sich zur Rücknahme verschiedener Wertstofffraktionen an eher gering frequentierten Standorten. Sie kann dank der in einem gemeinsamen Aufnahmebehälter untergebrachten Sammelbehälter platzsparend und unter gemeinsamem Zugriff auf die Sammelbehälter betrieben werden.

Besagter Vorteil wird auch mit einer weiteren Ausführungsform erzielt, bei der in einem Aufnahmebehälter mehrere Sammelbehälter untergebracht sind, die über mehrere BBEs mit verschiedenen Wertstoffen befüllt werden. Mit dieser Ausführungsform kann den Anforderungen an eine erfindungsgemässe Wertstoffsammelanlage zur Aufstellung an höher frequentierten Standorten entsprochen werden, da mehrere Benutzer gleichzeitig Entsorgungsaktionen durchführen können.

Eine Wertstoffsammelanlage mit einem solchen Aufnahmebehälter und mehreren BBEs kann auf mehrere Arten realisiert werden:

Die BBEs können jeweils einer Wertstofffraktion zugeordnet sind, wobei zur weiteren Durchsatzsteigerung auch mehrere BBEs für die selbe Wertstofffraktion zur Verfügung stehen können.

In diesem Fall kann das EuS einfach und billig ausfallen, da die vorselektierten Stücke nur auf richtig eingeworfen/ falsch eingeworfen abgeprüft werden müssen, und in die Annahmeeinrichtung integriert sein. Ein Teil der Funktionalität des EuS ist also schon in den BBEs implementiert.

Diese Anordnung ist trotz Rücknahme verschiedener Wertstofffraktionen billig, wenig fehleranfällig, technisch einfach zu warten und bietet mehrere gleichzeitig verfügbaren BBEs und damit eine gute Eignung für hochfrequentierte Standorte.

Die Anzahl gleichzeitig ausführbarer Einwürfe kann andererseits weiter stark gesteigert werden. So ist auch eine Wertstoffsammeleinrichtung denkbar, die mit BBEs ausgestattet ist, welche jeweils die Annahme von mehreren Wertstofffraktionen erlauben.

Wartezeiten können so bei hochfrequentierten Systemen gesenkt werden, da nicht nur gleichzeitig verschiedene Wertstofffraktionen, sondern auch gleichzeitig gleiche Wertstofffraktionen einwerfbar sind und sich damit die Wahrscheinlichkeit, dass eine BBE unbelegt ist, stark erhöht.

Nach den Gesetzen der Kombinatorik können n Benutzer, die jeweils Wertstoffe aus einer von n Wertstofffraktionen dabei haben, die sie entsorgen wollen, zu folgender Anzahl von Kombinationen der Wertstofffraktionen auf die Benutzer führen:

$$\binom{n}{n} + \binom{n}{n-1} + ... + \binom{n}{1}$$

Hierbei bezeichnet der erste Summand die Möglichkeit, dass alle Benutzer Wertstoffe aus jeweils voneinander verschiedenen Fraktionen mitführen, der zweite Summand, die Möglichkeit, dass jeweils zwei Benutzer Wertstoffe der gleichen Fraktion mitführen, usw., und der letzte Summand, dass alle Benutzer Wertstoffe der gleichen Fraktion mitführen.

Es ist klar, dass bei einer höheren Frequentierung des Sammelsystems, d.h. hohen Zahlen n von Benutzern, die gleichzeitig Wertstoffe entsorgen wollen, die Anzahl von Benutzer mit gleichen Entsorgefraktionen und damit die Wartezeiten stark ansteigen, während die Wahrscheinlichkeit dafür, dass alle Benutzer unterschiedliche Fraktionen mitbringen, stark sinkt.

Da bei Ausführungsformen der Erfindung mit BBEs, die jeweils nur eine Wertstofffraktion entgegennehmen, gleichzeitig immer nur unterschiedliche Wertstofffraktionen entsorgt werden können, bei Ausführungsformen des Sammelsystems mit BBEs, die jeweils mehrere Wertstofffraktionen entgegennehmen, jedoch auch gleiche, kann durch Verwendung von BBEs, die jeweils mehrere Wertstofffraktionen entgegennehmen, der Nutzen der Sammelanlage für hohe Benutzerzahlen extrem gesteigert werden.

Allerdings ist dann ein aufwendigeres EuS nötig, um die unselektiert ankommenden Wertstoffe zu trennen.

Alternativ könnten auch Sammelsysteme ausgeführt werden, deren BBEs zwar nur jeweils eine Wertstofffraktion entgegennehmen, die jedoch pro Wertstofffraktion in mehrfacher Anzahl zur Verfügung stehen.

In einer weiteren Variante werden Aufnahmebehälter, die jeweils einen Sammelbehälter enthalten, von einer BBE aus jeweils mit einer Wertstofffraktion befüllt. Die EuS ist analog zu der oben beschriebenen aufgebaut. Das Leitsystem besteht aus einzelnen Zuleitungen, die an die entsprechenden Sammelbehälter führt.

Einsatzmöglichkeiten bestehen für geringfrequentierte oder billige Sammelsysteme für verschiedene Wertstofffraktionen.

Durch den Einbau von Einzelbehältermodulen ist es, wie schon obenstehend angesprochen, ausserdem möglich, schon am Markt erhältliche Behälter zu verwenden. Zusätzlich lassen sich die Einzelbehälter nach Belieben gruppieren, z.B. um den Rücknahmeautomaten herum, so dass die Konfiguration der Anlage örtlichen Gegebenheiten gut anpassbar ist.

Bevorzugt werden Wertstofffraktionen, die einer in Bezug auf Entleerungshäufigkeit, Lagerungsbedingungen o.ä. gleichen Kategorie angehören, in getrennten Sammelbehältern in einem Aufnahmebehälter zusammengefasst, während andere, nicht zu dieser Kategorie zählende Fraktionen in anderen Behältern untergebracht werden, so dass in einem Aufnahmebehälter gruppierte Wertstofffraktionen zwar sortenrein, aber doch zusammen gelagert und abtransportiert werden können.

Eine weitere Ausführungsform weist mehrere Aufnahmebehälter auf, die jeweils als Einzelbehältermodule oder als Aufnahmebehälter mit mehreren Sammelbehältern ausgeführt sind und die über mehrere BBEs beschickt werden.

Diese Ausführungsform bietet die höchste Konfigurierbarkeit der bisher vorgestellten. Sowohl Einzelbehältermodule als auch Aufnahmebehälter mit mehreren Sammelbehältern können so in ein Gesamtkonzept eingebunden sein. Dabei bieten Einzelbehältermodule und Aufnahmebehälter mit mehreren Sammelbehältern wie oben beschrieben jeweils spezifische Vorteile.

Jede BBE kann dabei einer Wertstofffraktion zugeordnet sein oder aber mehreren. Es ist sowohl möglich, dass alle BBEs alle Wertstofffraktionen annehmen, als auch, dass pro BBE nur jeweils eine Wertstofffraktion angenommen wird oder aber eine Kategorie, bzw. Gruppe von Wertstofffraktionen.

Die Annahme einer Gruppe von Wertstofffraktionen an einer BBE kann z.B. dann von Vorteil sein, wenn zum Erkennen, ob ein eingeworfenes Wertstofftrum einer solche Wertstoffkategorie zugehörig ist und zur Trennung der Wertstoffe dieser Kategorie in die beinhalteten Fraktionen ein gemeinsamer Sensor verwendet werden kann, wie z.B. ein opto-elektronischer Sensor zur Erkennung von Weissglas, Grünglas und Braunglas.

Zusätzlich ist es in dieser Ausführungsform möglich Wertstoffen von Fraktionen einer solchen Fraktionskategorie, die sich entweder wegen eines gemeinsam zu nutzenden Sensors oder aus Lagerungs, bzw. Abtransportgründen ergibt, sowohl mit einem vom Rest der Anlage getrennten EuS zu Erkennen und zu Selektieren als auch getrennt vom Rest sortenrein aber doch in einem gemeinsam handhabbaren Aufnahmebehälter zu lagern.

Eine durchgängig separierte Verarbeitung einer dieser Wertstofffraktionskategorie angefangen von einer zugeordneten BBE bis zu einem zugeordneten Aufnahmebehälter ist also auf diese Weise möglich.

Bevorzugt sind die Aufnahmebehälter dabei um den Rücknahmeautomaten herum gruppiert. Wege, die die Wertstoffe zwischen dem im Rücknahmesystem der Annahmeeinrichtung nachgeordneten EuS und den Behältern zurückzulegen haben, sind auf diese Weise gleich lang und so kurz wie möglich.

Durch eine solche symmetrische Bauweise kann erreicht werden, dass die jeweiligen Behälterzuleitungen baugleich ausgeführt werden können, wodurch eine weitere Kostenreduktion erzielt wird.

Zu erwähnen bleibt, dass je nach Art und Anzahl der zu trennenden Wertstofffraktionen und der vorgesehenen Durchsatzkapazität die eine oder andere Ausführungsform geeignet erscheint:

Die von den Einzel-BBEs kommenden Wertstoffe können separat voneinander weiterbehandelt werden, oder nicht nach Einwurf-BBE vorsepariert in einem gemeinsamen Erkennungsund Identifizierungsabschnitt.

Auch eine nach Wertstofffraktionen getrennte Bearbeitung der eingehenden Wertstoffe ist denkbar. Dies setzt allerdings voraus, das die Wertstoffe vorselektiert eingegeben wurden, d.h. dass ein Teil der Aufgabe der EuS bereits durch die Zuordnung der Wertstoffe zu bestimmten Einwürfen erfolgt ist. Dies kann entweder dadurch herbeigeführt werden, dass die BBEs je einer Wertstofffraktion zugeordnet sind, oder dass die Annahmeeinrichtungen der BBEs aus getrennten Einwurf-, bzw. Einlegeöffnungen besteht, wobei jede Öffnung einer Wertstofffraktion zugeordnet ist und eine entsprechende Vernetzung, bzw. Verrohrung zur fraktionsgetrennten Weiterleitung bereitgestellt wird. Die EuS kann auf diese Weise schon in die Annahmeeinrichtung integriert sein, wodurch nur ein auf die jeweilige Fraktion abgestimmten Erkennungssensor (billig) verwendet werden muss, der auf richtige oder falsche Eingabe des betreffenden Trums in den zugeordneten Einwurf abprüfen muss.

Eine solche Funktionsweise erscheint für hochfrequentierte Systeme aber ungenügend. In solchen Systemen mit BBEs, die jeweils ungetrennt die Eingabe aller oder mehrerer Wertstofffraktionen erlauben, erscheint eine Ausführungsform der Erfindung günstiger, bei der die Erkennung und Selektion der Wertstoffe gebündelt in einem gemeinsamen Anlagenabschnitt erfolgt, was bedeutet, dass nur ein Gesamt-EuS benötigt wird. Dies wird allerdings durch eine komplex zu gestaltende Identifizier-, bzw. Verteilereinrichtung und entsprechender komplexer Verrohrung erkauft. Um die Verarbeitungstaktzahlen weiter zu steigern kann auch für BBEs, die die Eingabe von mehreren Wertstofffraktionen zulassen, ein entsprechend ausgeführtes EuS eingesetzt werden, wobei dann für jede BBE ein Einzel-EuS, das die eingeworfenen Stücke mehrerer Wertstofffraktionen zuordnen können muss, bereitgestellt wird. Die Komplexität der Verrohrung wird allerdings dadurch weiter gesteigert.

Selbstredend sind auch Mischformen denkbar, so könnte beispielsweise eine BBE mehrere Einwurföffnungen für vorselektierte Wertstoffe und für die restlichen Wertstoffe eine gemeinsame Einwurföffnung vorsehen.

Mehrere BBEs für jeweils einen bestimmten Wertstoff könnten einer gemeinsamen EuS zugruppiert sein, die anderen BBEs nicht, usw., man denke dabei an Wertstoffe, die alle einer bestimmten Kategorie angehören (zum Beispiel Weissglas, Grünglas, Braunglas), welche für einen gemeinsame EuS besonders geeignet erscheinen.

In einer bevorzugten Ausführungsform der Erfindung nach Anspruch 19 ist der Rücknahmeautomat als Säule ausgebildet, die eine mit der Anzahl der vorgesehenen BBEs korrespondierende Anzahl von Seitenflächen aufweist, auf denen die BBEs angeordnet sein können. Alternativ können auch eine oder mehrere Seiten der Automatensäule als Werbeträger genutzt werden.

Neben der oben erwähnten Funktionalität eines Rücknahmesystems mit mehreren BBEs und dem formschönen und ästhetischen Äusseren des Rücknahmeautomats, dass sicherlich hilft, die Akzeptanz beim Publikum zu steigern, kann auf diese Weise eine platzsparende Bauweise des Rücknahmeautomats errreicht werden, ohne dabei die Zugänglichkeit des Automaten einzuschränken. In Kombination mit der obenstehend erwähnten Gruppierung der Aufnahmebehälter um den Rücknahmeautomaten herum erfolgt eine weitere Symmetrisierung des Aufbaus des Gesamtsystems, was zu den erwähnten Kostenreduzierungen führt.

Besonders hervorzuheben ist es ausserdem, dass sich auf diese Weise der Aufbau eines Wertstoffsammelsystems wesentlich vereinfachen lässt, da sich die Zuleitbahnen zu den einzelnen Behältern nicht überqueren, wodurch die interne Verrohrung, bzw. Vernetzung entzerrt wird. Im Falle von BBEs, die jeweils zum Einwurf einer Wertstofffraktion, bzw. einer Wertstofffraktionsgruppe vorgesehen sind ist diese Vereinfachung auch auf das EuS ausgeweitet, da die den BBEs nachgeordneten Einzel-EuS strangartig und ohne gegenseitige Überkreuzungen oder Berührungspunkte von der Eingabeöffnung zum Einzel-Leitsystem verlaufen können.

Denkbar wäre auch das gegeneinander drehbare Lagern der Benutzerdienfeld-Ebene, EuS-Ebene und der Leitsystemebene innerhalb eines solchen Rücknahmeautomaten, wobei einem Entsorger dabei auf Knopfdruck die dem gewünschten Wertstoff zugeordnete BBE zugedreht werden könnte. Auch die Verteilung der erkannten Wertstoffe auf die einzelnen Leitsysteme könnte in dieser Ausführungsform durch verdrehen der unterschiedlichen Funktionsebenen erfolgen.

Selbstverständlich wäre auch eine zylindrische Form der Automatensäule mit auf der Umfangsoberfläche angeordneten BBEs denkbar.

Alternativ dazu kann der Rücknahmeautomat auch als eine Automatenzeile mit nebeneinander angeordneten BBEs ausgebildet sein.

Diese Formgebung ist für viele in der Praxis anzutreffende Aufstellungsorte solcher Automaten, wie z.B. an Hauswänden, in Durchgangspassagen o.ä. günstig oder aufgrund des dortigen Platzangebots das einzig mögliche.

Ausserdem denkbar wäre zur weiteren Platzersparnis auch eine Integration der BBE-Front in eine (Haus-) Wand oder die Aufstellung von getrennten Rücknahmeautomaten, die dann jeweils mit einem oder mehreren Sammelbehältern verbunden sind.

Bevorzugt wird der Rücknahmeautomat mit einem Werbeträger verkleidet. Durch Vermietung der Werbefläche auf dem Rücknahmeautomat können die Anschaffungskosten des Wertstoffsammelsystems schneller amortisiert werden, was die Akzeptanz bei potentiellen Kunden weiter steigern sollte. Da der Rücknahmeautomat des Wertstoffsammelsystems insbesondere aufgrund der ästhetisch ansprechenden Gestaltung des Wertstoffsammelsystems (vom Rücknahmeautomat weg ausgelagerte Bodenbehälter usw.) an Orten mit hoher Werbekraft aufgestellt werden kann - z.B. im Eingangsbereich von Supermärkten u.ä., können auf diese Weise beträchtliche Einnahmen erzielt werden.

Es bietet sich an, einen Rücknahmeautomaten in einem Litfasssäulenartigen Werbeträger unterzubringen oder - beispielsweise an der Rückfront einer Automatenzeile - einen Werbeträger in Form einer Plakatwand vorzusehen. Der Werbeträger ist dabei vorzugsweise hinterleuchtet und in Form eines absperrbaren Schaukastens ausgeführt. Da der Rücknahmeautomat durch die Verkleidung mit dem Werbeträger vom Publikum nicht mehr wahrgenommen wird, ist es auch nicht mehr nötig, dem Rücknahmeautomat eine spezielle Form zu geben. Er kann jetzt als (formloses) Technikmodul innerhalb und separat vom Werbeträger ausgeführt sein.

Die geschilderten Einzelmerkmale der Ausführungsformen gemäss der Ansprüche lassen sich, soweit es sinnvoll erscheint, beliebig kombinieren.

Unter Bezugnahme auf die nachfolgenden Zeichnungen wird die vorliegende Erfindung nun ausführlicher dargestellt.

Fig. 1 zeigt eine perspektivische Darstellung eines Wertstoffsammelsystems;

Fig. 2 zeigt einen perspektivischen Längsschnitt eines unterirdisch eingebauten Wertstoffsammelsystems;

Fig. 3A und 3B zeigen Seitenansichten eines Wertstoffsammelsystems;

Fig. 4A und 4B zeigen Schnittansichten eines Wertstoffsammelsystems entlang den in Fig. 2 gezeigten Schnittlinien;

Fig. 5 zeigt eine Untersicht einer Deckelkonstruktion eines Aufnahmebehälters gemäß einer bevorzugten Ausführungsform des erfindungsgemäßen Wertstoffsammelsystems;

Fig. 6 zeigt eine vergrößerte Darstellung der Deckelkonstruktion eines Aufnahmebehälters gemäß einer bevorzugten Ausführungsform des erfindungsgemäßen Wertstoffsammelsystems;

Fig. 7A und 7B zeigen verschiedene Zustände während des Öffnen dieses Aufnahmebehälters;

Fig. 8A, 8B und 8C zeigen den Austausch eines Sammelbehälters von dem Bodenbehälter in den Transportbehälter; und

Fig. 9A und 9B zeigen schematisch verschiedene Varianten bezüglich der Anordnung der Sammelbehälter in einem Aufnahmebehälter gemäß einer bevorzugten Ausführungsform des erfindungsgemäßen Wertstoffsammelsystems sowie bezüglich der Anordnung eines Verteilersystems.

Fig. 10 zeigt einen Schnitt in Längsrichtung durch das erfindungsgemäße Wertstoffsammelsystem gemäß einer bevorzugten Ausführungsform für drei Wertstoff-Fraktionen;

Fig. 11 zeigt einen Schnitt in Querrichtung durch das erfindungsgemäße Wertstoffsammelsystem gemäß dieser bevorzugten Ausführungsform für drei Wertstoff-Fraktionen;

Fig. 12 zeigt einen Schnitt in Längsrichtung durch eine weitere bevorzugte Ausführungsform des erfindungsgemäßen Wertstoffsammelsystems;

Fig. 13 zeigt einen Schnitt in Längsrichtung durch eine weitere bevorzugte Ausführungsform des erfindungsgemäßen Wertstoffsammelsystems;

Fig. 14a zeigt eine schematische Draufsicht auf das erfindungsgemäße Wertstoffsammelsystem gemäß einer bevorzugten Ausführungsform für drei Wertstoff-Fraktionen mit einem Transportband und Leitanschlägen;

Fig. 14b zeigt eine schematische Draufsicht auf das erfindungsgemäße Wertstoffsammelsystem gemäß einer bevorzugten Ausführungsform für drei Wertstoff-Fraktionen mit drei Transportbändern;

Fig. 15 zeigt eine schematische Seitenansicht einer Ausführungsform der Erfindung mit einer Benutzerbedieneinheit und einem Sammelbehälter;

Fig. 16 zeigt eine schematische Seitenschnittansicht einer Ausführungsform der Erfindung mit zwei Benutzerbedieneinheiten;

Fig. 17 zeigt eine isometrische Ansicht einer weiteren Ausführungsform der Erfindung;

Fig. 18 zeigt eine Schnittansicht in der Erdoberflächenebene einer weiteren Ausführungsform der Erfindung;

Fig. 19 zeigt eine Schnittansicht in der Erdoberflächenebene einer weiteren Ausführungsform der Erfindung;

Fig. 20 zeigt eine Schnittansicht in der Erdoberflächenebene einer weiteren Ausführungsform der Erfindung;

Fig. 21 zeigt eine schematische, perspektivische Ansicht eines Abschnitts der internen Vernetzung eines Wertstofferkennungs- und Selektiersystems bei einer Ausführungsform der Erfindung;

Fig. 22 zeigt eine schematische Seitenschnittansicht eines bekannten Bodenbehälter-Einzelmoduls.

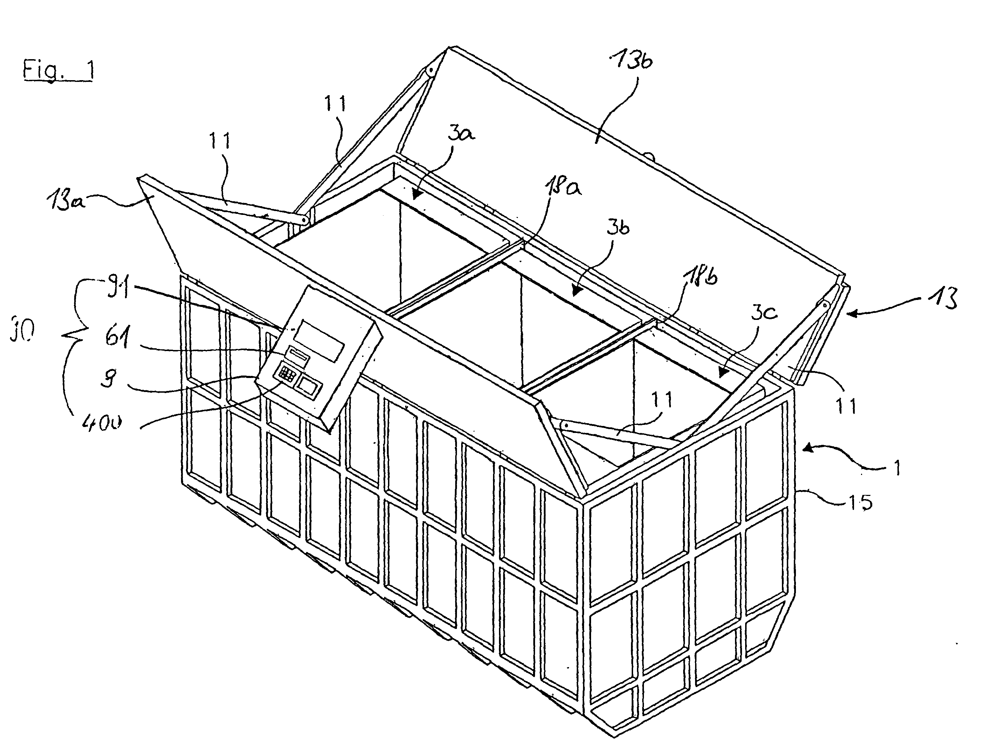

Dabei dienen die Figuren 1 bis 9B nur zum besseren Verständnis der Erfindung und stellen keine Ausführungsformen der Erfindung dar. Es ist aber klar, dass sich die dort geziegten Einzelheiten - soweit sinnvoll - im Rahmen der Erfindung verwirklichen lassen.

Zunächst wird auf Fig. 1 Bezug genommen. Mit dem Bezugszeichen 1 ist ein geöffneter Aufnahmebehälter dargestellt. Im Aufnahmebehälter 1 sind drei Sammelbehältnisse in Gestalt herausnehmbarer und transportabler Sammelbehälter 3a, 3b, 3c aufgenommen, die jeweils gleich ausgestaltet und von Querverstrebungen 18a, 18b voneinander beabstandet im Aufnahmebehälter 1 angeordnet sind. Die Querverstrebungen 18a, 18b dienen dazu, den Aufnahmebehälter 1 bei unterirdischem Einbau gegen die von den Seiten eindrückenden Erdmassen abzustützen. Die vollen Sammelbehälter 3a, 3b, 3c lassen sich zum Zweck der Entleerung oder des Austauschs gegen leere Sammelbehälter aus dem Aufnahmebehälter herausnehmen. Grundsätzlich könnten die Sammelbehältnisse aber auch z.B. in Form von Sammelfächern fest in den Aufnahmebehälter integriert bzw. einstückig mit diesem ausgebildet sein. In diesem Fall könnte die Entleerung voller Sammelbehältnisse z.B. durch Absaugung erfolgen.

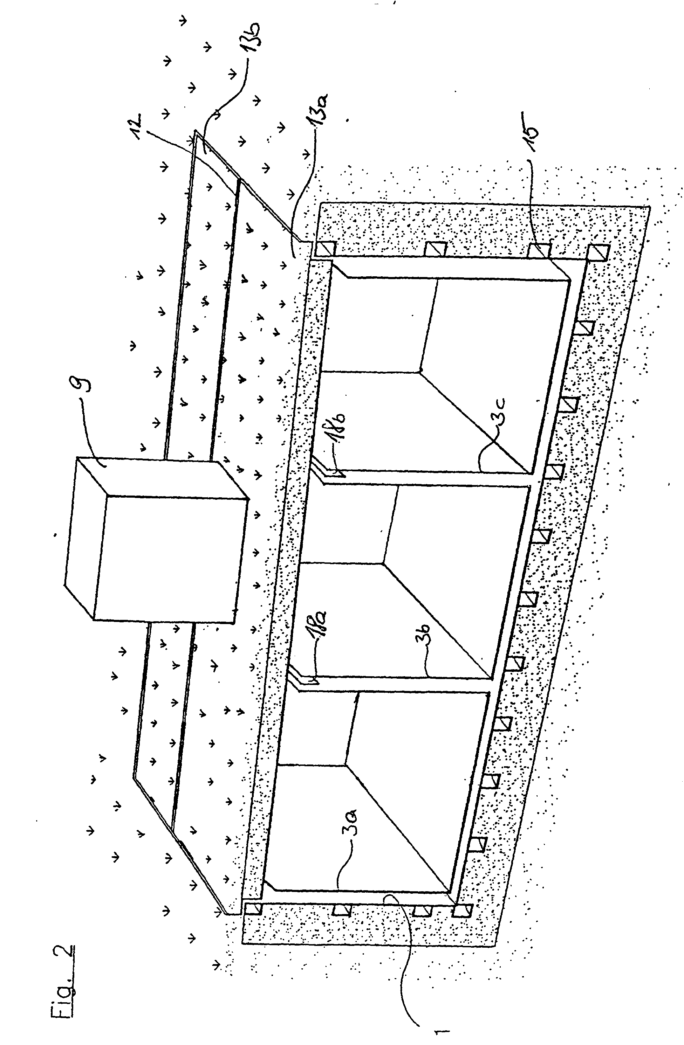

Der Aufnahmebehälter 1 ist mit einer Deckelkonstruktion 13 verschließbar, die aus zwei Deckeln 13a, 13b gebildet ist. Die beiden Deckel 13a, 13b sind derart unterschiedlich breit ausgebildet, daß die Stoßlinie 12 im geschlossenen Zustand des Aufnahmebehälters in Bezug auf dessen Längssymmetrieebene, die in Fig. 2 mit dem Bezugszeichen 118 angedeutet ist, asymmetrisch bzw. außermittig zum Liegen kommt. An dem breiteren Deckel 13a ist außenseitig ein Rücknahmeautomat 9 angebracht, und zwar so, daß er im geschlossenen Zustand des Aufnahmebehälters 1 bezogen auf die gesamte Oberfläche der beiden Deckel 13a, 13b im wesentlichen zentral liegt. Die beiden Deckel 13a, 13b des Aufnahmebehälters 1 werden über eine Schubgelenkgetriebeanordnung geöffnet, von der jeweils die an den Deckeln 13a, 13b angelenkten Gestänge 11 sichtbar sind. Die Deckel 13a, 13b selbst sind längsseitig am Aufnahmebehälter 1 angelenkt.

In Fig. 2 ist der Aufnahmebehälter 1 in einem in das Erdreich eingebauten Zustand gezeigt. Die Einbautiefe des Aufnahmebehälters 1 ist derart gewählt, daß die Deckel 13a, 13b oberseitig mit der angrenzenden Erdreichoberfläche abschließen. Auch ist in Fig. 2 erkennbar, daß die oberseitigen Deckelflächen entsprechend der angrenzenden Erdreichoberfläche mit Gras versehen ist. An dieser Stelle sei angemerkt, daß die Deckelkonstruktion grundsätzlich mit unterschiedlichen Belägen, z.B. Strukturblech, Fallschutzplatten, Steinplatten, Epoxidharz mit Quarzsandeinstreuung und dergleichen, versehen werden können. Auf diese Weise ist es je nach den individuellen Bedürfnissen möglich, das Wertstoffsammelsystem entweder möglichst unauffällig in die umgebende Fläche einzubinden oder aber es im bewußten Kontrast von der umgebenden Fläche abzuheben. Damit ist nur mehr der an der Deckelkonstruktion 13 angebrachte Rücknahmeautomat 9 unmittelbar zu sehen. Dieser läßt sich schlicht und dennoch design-betont gestalten, so daß er auch in ein anspruchsvolles architektonisches Ambiente integriert werden kann.

In Fig. 2 ist erneut zu erkennen, daß zwischen den einzelnen Sammelbehältern 3a, 3b, 3c jeweils eine Querverstrebung 18a, 18b vorgesehen ist und darüber hinaus der Aufnahmebehälter 1 außenseitig mit einer Stützstruktur 15 ausgestattet ist, wobei das Querschnittsprofil der einzelnen Verstrebungen erkennbar ist. Alternativ dazu kann der Aufnahmebehälter 1 innenseitig mit der Stützstruktur verstärkt und außenseitig mit einem Korrosionsschutz versehen sein.

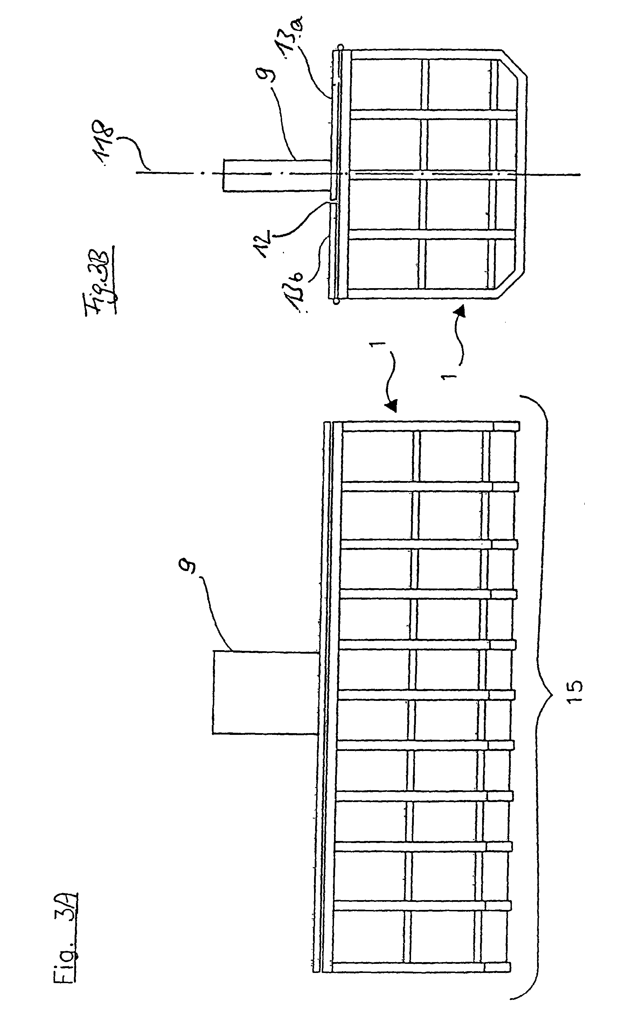

In Fig. 3A und 3B sind jeweils die beiden Seitenansichten des Aufnahmebehälters 1 dargestellt, wobei in Fig. 3B deutlich zu erkennen ist, daß der Rücknahmeautomat 9 an dem breiteren Deckel 13a angeordnet ist. Die außenseitig an dem Aufnahmebehälter 1 angebrachte Stützstruktur 15 ist derart ausgestaltet, daß die Dicke der Seitenwandung des Aufnahmebehälters 1 auf ein Minimum reduziert werden kann, ohne dabei der Gefahr ausgesetzt zu sein, daß aufgrund der auf die Seitenwandungen des unterirdisch eingebauten Aufnahmebehälters 1 einwirkenden Erdreichmassen der Aufnahmebehälter 1 verformt wird. Das Profil der Stützverstrebungen muß notwendigerweise nicht rechteckig sein, sondern kann auch jede andere Form aufweisen, solange die Stützfunktion aufrechterhalten bleibt.

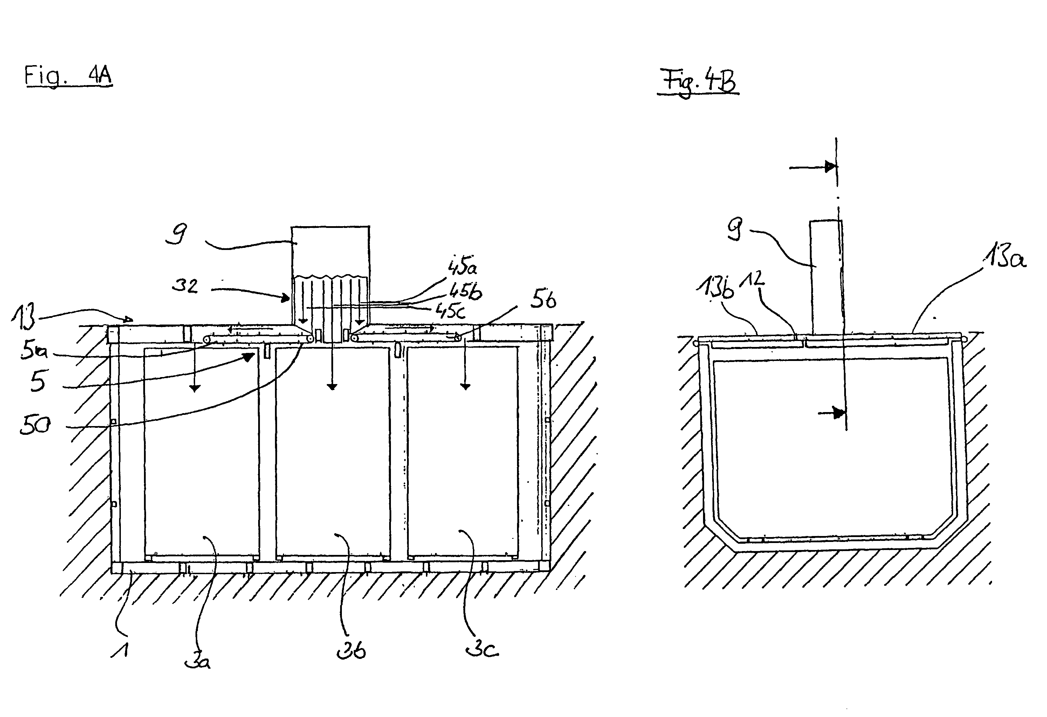

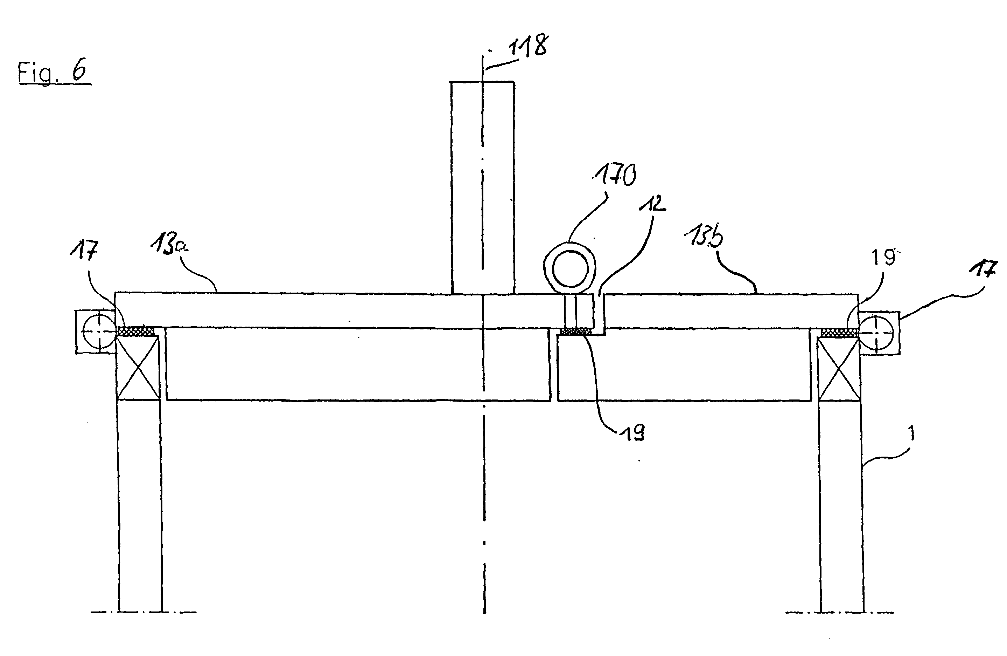

In Fig. 4A und Fig. 4B sind ein Längsschnitt bzw. ein Querschnitt des Aufnahmebehälters 1 dargestellt. Erneut sind in Fig. 4A deutlich die Sammelbehälter 3a, 3b, 3c erkennbar, welche von den Querverstrebungen 18a, 18b voneinander getrennt sind und dadurch auch lagefixiert werden. In Fig. 4B ist erkennbar, daß die Deckel 13a, 13b längsseitig angelenkt sind und einen außermittigen Überlappungsbereich aufweisen, der im Zusammenhang mit Fig. 6 noch näher beschrieben wird. Fig. 4A und 4B zeigen den an der Deckelkonstruktion 13, d.h. am breiteren Deckel 13a, angeordneten Rücknahmeautomaten 9. In dieser Ausführungsform ist der Rücknahmeautomat 9, wie bereits erwähnt, in der Weise außenseitig an dem breiteren Deckel 13a angebracht, daß er im geschlossenen Zustand des Aufnahmebehälters 1 bezogen auf die gesamte Oberfläche der beiden Deckel 13a, 13b im wesentlichen zentral liegt.

Das Bezugszeichen 50 in Fig. 4A und 4B zeigt das an den Rücknahmeautomaten 9 gekoppelte Leitsystem 5, das erfindungsgemäß die Funktion der Verteilung der sortenrein sortierten Wertstoffe auf jeweilige, den verschiedenen Wertstoff-Fraktionen zugeordnete Sammelbehälter hat.

Dazu weist der Rücknahmeautomat 9 ein hier nicht gezeigtes Wertstofferkennungs- und Selektiersystem 4 auf und bildet somit ein integriertes Wertstoffrücknahmesystem 9, 4 zum Annehmen verschiedenartiger Wertstoffe und zum sortenreinen Beschicken entsprechender, den jeweiligen Wertstofffraktionen zugeordneten Verteilerstrecken des Leitsystems 5 auf.

Fig. 4A zeigt ein im Rücknahmeautomaten vorgesehenes Schachtsystem 32 mit drei Schächten 45a, 45b, 45c, die die Ausgänge des in den Rücknahmeautomaten 9 integrierten Wertstofferkennungs- und Selektiersystem 4 (nicht gezeigt) darstellen. Sie beschicken das Leitsystem 5 mit den drei selektierten Wertstoff-Fraktionen, die so zu den jeweiligen Sammelbehältern 3a, 3b, 3c gelangen.

In dieser Ausführungsform bilden die Schächte 32a, 32b, 32c zusammen mit einem Fördersystem 50 die entsprechenden Verteilerstrecken des Leitsystems 5. Das Fördersystem 50, das die durch den Rücknahmeautomaten 9 angenommenen und über das Schachtsystem 32 selektierten Wertstoffe den einzelnen Sammelbehältern 3a, 3b, 3c zuführt, ist durch eine geeignete Halterung in die Deckelkonstruktion 13 innenseitig integriert. Das Fördersystem 50 ist als eine Förderbandanordnung gebildet aus zwei Förderbändern 5a, 5b ausgestaltet. Wie es aus Fig. 4A ersichtlich ist, ist der Rücknahmeautomat 9 unmittelbar über dem mittleren Sammelbehälter 3b positioniert, so daß dieser Sammelbehälter 3b unmittelbar durch den Rücknahmeautomaten 9 mit den entsprechenden Wertstoffen gespeist werden kann. Die seitlich des mittleren Sammelbehälters 3b angeordneten Sammelbehälter 3a und 3c werden über die beiden Förderbänder 5a bzw. 5b mit den jeweiligen Wertstoffen versorgt, die zu diesem Zweck ausgehend vom Rücknahmeautomaten bzw. dem mittleren Sammelbehälter 3b zu den seitlichen Sammelbehältern 3a bzw. 3c führen. Der Antrieb der Förderbänder 5a, 5b erfolgt vorzugsweise über einen ebenfalls in die Deckelkonstruktion 7 integrierten Elektromotor, der in den Figuren allerdings nicht zu sehen ist.

Um die gewünschte sortenreine Verteilung der über den Rücknahmeautomaten aufgenommenen Wertstoffe zu erreichen, umfaßt das Wertstofferkennungs- und Selektiersystem eine in den Rücknahmeautomaten 9 integrierte elektronische Steuerungseinheit, die mit einer in den Figuren nicht dargestellten Wertstofferkennungs- und Selektiersystem zum automatischen Erkennen und sortenreinen Selektieren der über den Rücknahmeautomaten 9 angenommenen, verschiedenartigen Wertstoffe, sowie dem Leitsystem 5 in Verbindung steht. Die Wertstofferkennung kann z. B. durch Gewichts- und Längenmessung, durch Ablesen eines an den Wertstoffen vorgesehenen Codes, z.B. EAN-Code, durch Bilderkennung oder durch eine andere elektronische oder elektromechanische Abtastung erfolgen. Nach dem Erkennen des angenommenen Wertstoffs sendet das Erkennungs- und Selektiersystem ein entsprechendes, die Wertstofffraktion angebendes Signal an die elektronische Steuerungseinheit aus, die wiederum ein Ansteuerungssignal an das Erkennungsund Selektiersystem zurücksendet, um den angenommenen und erkannten Wertstoff entsprechend zu selektieren, sowie an das Fördersystem 50, um die Förderbandanordnung in Gang zu setzen und den selektierten Wertstoff dem zugeordneten Sammelbehälter zuzuführen. Ein derartiges automatisches Erkennungs- und Selektiersystem gestattet auch das Erkennen fälschlich oder irrtümlich eingeführter Waren, in dieser Ausführungsform z.B. Glasflaschen, die in einem anderen Wertstoffsammelsystem zu sammeln wären.

Das Bezugszeichen 400 (Fig.1) zeigt eine mit der elektronischen Steuerungseinheit in Verbindung stehende Programmtastatur mit Anzeigevorrichtung, über die sämtliche Programmierungsschritte betreffend die Erkennung und Selektierung von Wertstoffen erfolgt. Unterstützt werden kann diese Programmierung durch ein integriertes Testprogramm zur Fehlerdiagnose und Wartung.

Im Hinblick auf die im Wertstofferkennungs- und Selektiersystem integrierte elektronische Steuerungseinheit hat das erfindungsgemäße Wertstoffsammelsystem des weiteren ein mit der elektronischen Steuerungseinheit und der Anzeigevorrichtung 400 des Wertstoffrücknahmesystems 9, 4 in Verbindung stehendes Füllgradfeststellungssystem zum Feststellen des Füllgrads der einzelnen Sammelbehälter 3a, 3b, 3c und Ausgeben eines entsprechenden Füllgradanzeigesignals an die elektronische Steuerungseinheit und Anzeigevorrichtung. Durch Feststellung des Füllgrads läßt sich gegebenenfalls die Annahme eines oder mehrerer bestimmter Wertstoff-Fraktionen verhindern, deren zugeordneter Sammelbehälter eine bestimmte Füllgrenze bereits erreicht hat. Diese Feststellung kann erfolgen z.B. durch elektronische Zählung und Gewichtsmessung der den einzelnen Sammelbehältern 3a, 3b, 3c zugeleiteten Wertstoffe. Alternativ dazu könnten die einzelnen Sammelbehälter 3a, 3b, 3c elektronisch abgetastet, eine Dichte- oder Gewichtsmessung etc. durchgeführt werden, um den Füllgrad festzustellen. Der Füllgrad kann über die Anzeigevorrichtung am Rücknahmeautomaten 9 den Verbrauchern und über die Ausgabe eines entsprechenden Signals durch die elektronische Steuerungseinheit an eine zentrale Überwachungsstation, die mehrere Wertstoffsammelsysteme verwaltet und überwacht, weitergegeben werden.

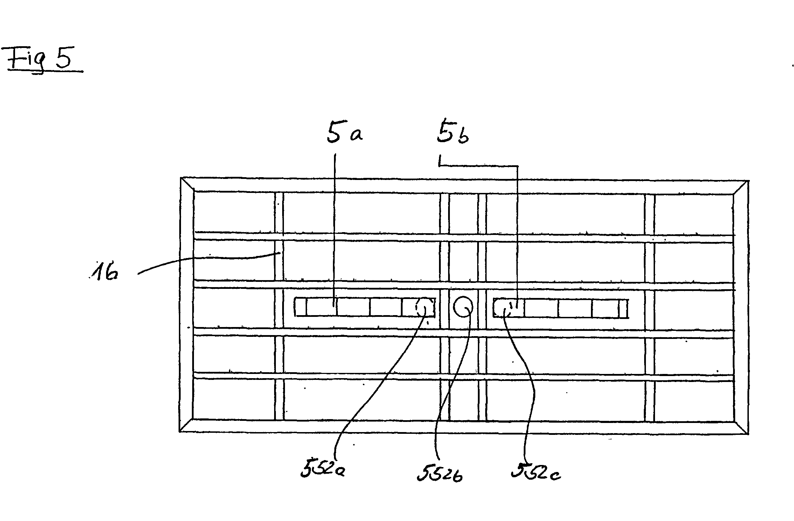

Aus Fig. 5 ist ersichtlich, daß die Deckelkonstruktion 13 innenseitig mittels einer gitterartigen Stützstruktur 16 verstärkt ist, in die die Förderbandanordnung 5a, 5b gemäß der Darstellung integriert ist. Diese Anordnung bietet insbesondere im geöffneten Zustand der Deckelkonstruktion 13, z.B. während des Entleerens des Aufnahmebehälters 1, einen optimalen Schutz des Fördersystems 42 vor Beschädigungen. Aus Fig. 5 sind ferner im Deckel 13a ausgebildete Öffnungen 552a, 552b, 552c zu erkennen. Die Öffnungen 552a und 552c liegen jeweils unmittelbar über den Förderbändern 5a bzw. 5c, die zu den Sammelbehältern 3a bzw. 3c führen. Die Öffnung 552b befindet sich unmittelbar über dem mittleren Sammelbehälter 3b, wodurch dieser ohne Zwischenschaltung eines Förderbands unmittelbar aus dem Rücknahmeautomaten mit den jeweiligen Wertstoffen versorgt wird. Durch die im wesentlichen zentrale Anordnung des Rücknahmeautomaten 9 an der Oberfläche der Deckelkonstruktion 13, die die Anordnung der beiden Förderbänder 5a, 5b bestimmt, lassen sich im Besonderen kurze Förderwege erzielen. Die Förderbänder 5a, 5b erstrecken sich im Besonderen soweit über den jeweils darunter befindlichen Sammelbehälter 3a bzw. 3c, daß die zu den Sammelbehältern 3a bzw. 3c transportierten Wertstoffe jeweils im wesentlichen zentral in den jeweiligen Sammelbehälter 3a bzw. 3c fallen. Hierdurch läßt sich ein gleichmäßiger Schüttkegel erzielen, der zu einer höchstmöglichen Aufnahmekapazität der jeweiligen Sammelbehältnisse und damit des Aufnahmebehälters insgesamt beiträgt.

Das in das Wertstoffsammelsystem integrierte Wertstoffrücknahmesystem kann neben dem vorstehend erwähnten Erkennungs- und Selektiersystem ein mit der Förderbandanordnung 50 und/oder der elektronischen Steuerungseinheit in Verbindung stehendes Erfassungssystem, z.B. eine optoelektronische Erfassungseinrichtung, aufweisen. Unabhängig von dem vorstehend erwähnten Erkennungs- und Selektiersystem läßt sich in diesem Fall auf Seiten des Verteilersystems 5 erfassen, ob der Förderbandanordnung 50 ein Wertstoff zugeleitet wurde. Durch Abgabe eines entsprechenden Signals über die elektronische Steuerungseinheit oder unmittelbar an die Förderbandanordnung 50 kann diese automatisch in Gang gesetzt werden, um den durch Wertstoff dem zugeordneten Sammelbehälter zuzuführen.

In den Figuren nicht dargestellt ist ein in den Rücknahmeautomaten 9 optional integriertes, mit der elektronischen Steuerungseinheit in Verbindung stehendes Volumenreduzierungssystem, z.B. in Form eines Preßmoduls, eines Schredders oder - sofern dies zweckmäßig und technisch möglich ist - einer Stapelvorrichtung, z.B. Becherstapelvorrichtung, um automatisch das Volumen eines aufgenommenen Wertstoffs z.B. durch Pressen oder Zerkleinern zu reduzieren und dadurch eine hohe Aufnahmekapazität der Sammelbehälter zu erhalten.

Alternativ dazu kann ein entsprechendes Volumenreduzierungssystem auch in den Sammelbehältern 3a, 3b, 3c vorgesehen sein. Vorzugsweise wird am Ende der Förderbandanordnung eine Entwertungseinrichtung vorgesehen sein, die die eingeworfene Wertstoffeinheiten, wie beispielsweise Flaschen oder Dosen, zerstört und damit sowohl zerkleinert als auch entwertet. Dies ist besonders in Zusammenhang mit einem mit der elektronischen Steuerungseinheit in Verbindung stehenden Pfanderstattungssystem von Bedeutung, wie es in Fig. 1 mit dem Bezugszeichen 61 angedeutet ist.

Das Pfanderstattungssystem 61 trägt dazu bei, die Motivation der Verbraucher zur Rückgabe verbrauchter, wiederverwertbarer Produkte und Materialien zu erhöhen. Die Pfanderstattung kann dabei in Form der Ausgabe von Geld oder eines Wertscheins, oder in Form der Aufwertung einer Kreditkarte erfolgen.

In Fig. 6 ist der Überlappungsbereich und auch die Abdichtung der Deckel 13a, 13b deutlicher dargestellt. Auch ist in dieser Darstellung eine das Scharniergelenk umgreifende Blecheinfassung 17 erkennbar, die dazu dient, das Eindringen von Schmutz und Feuchtigkeit in das Gelenk und daraus resultierende Nachteile, wie z.B. Schwergängigkeit, zu verhindern. Die längsseitig angelenkten Deckel 13a, 13b werden umlaufend am Aufnahmebehälter 1 über Dichtungen 19, welche auf der Stirnfläche der Seitenwandung des Aufnahmebehälters 1 angebracht sind, abgedichtet. Im Überlappungsbereich sind die Deckel 13a, 13b so gestaltet, daß einer der Deckel 13b einen Vorsprung aufweist, der mit dem anderen Deckel 13a einen Überlappungsbereich bildet, wobei zwischen den beiden Deckel ebenfalls eine Dichtung 19 vorgesehen sein kann. Mit diesen Dichtungsmaßnahmen wird erreicht, daß ein vollständiger Abschluß des Aufnahmebehälters 1 erzielt wird.

Ebenfalls ist in Fig. 6 ein Ring 170, vorzugsweise ebenfalls im Überlappungsbereich, vorgesehen, an dem beispielsweise ein Kran angreifen kann, um die Deckel aufzuhebeln und den Aufnahmebehälter 1 zu öffnen. Wie das Öffnen des Aufnahmebehälters 1 im einzelnen funktioniert, wird in Fig. 6 deutlicher dargestellt.

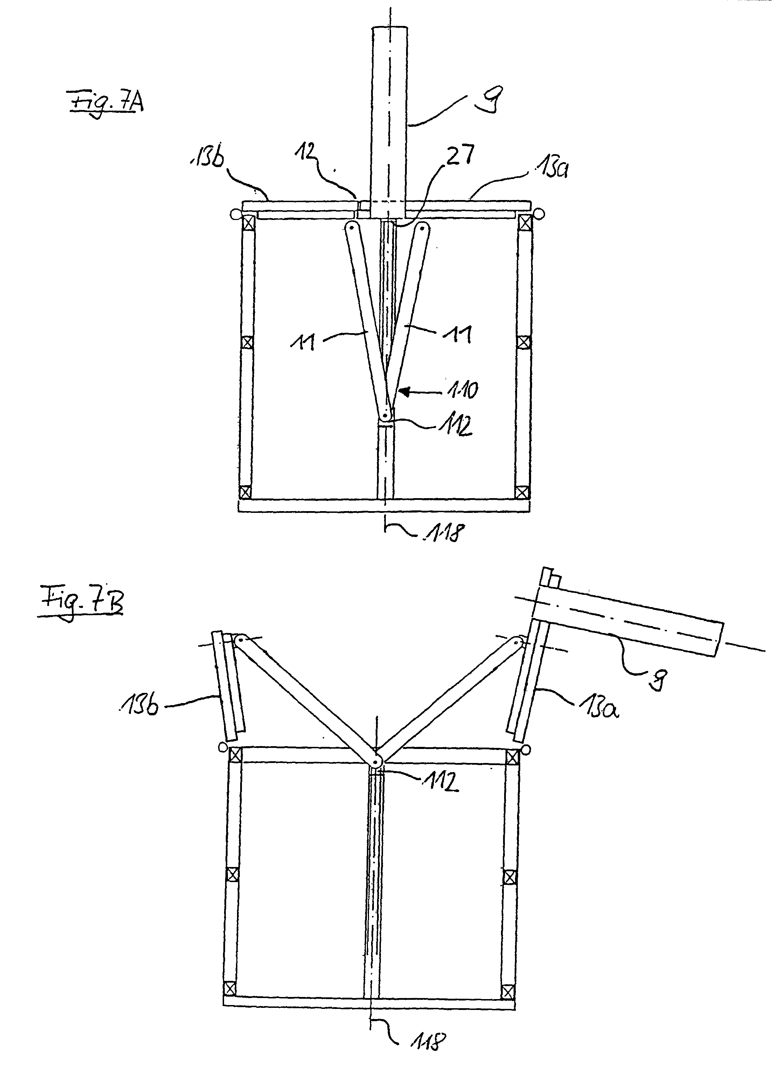

In den Fig. 7a, 7b ist die Schubgelenkgetriebeanordnung 110 zum Öffnen der Deckel 7 dargestellt. Insbesondere sind zwei Phasen des Öffnen des Aufnahmebehälters 1 dargestellt. Die Schubgelenkgetriebeanordnung 110 umfaßt ein Gestänge 11, das jeweils an einem Deckel 13 und an einem gemeinsamen Schlitten 112 angelenkt ist. Der Schub des Schlittens 112 erfolgt in dieser Ausführungsform dadurch, daß einer der Deckel 13a, 13b in Richtung des in Fig. 7 gezeigten Pfeils mittels eines Kranes, der an dem Ring 170 angreift, bewegt wird. Diese Bewegung des Deckels wird über das Gestänge 11 auf den im wesentlichen vertikal geführten Schlitten 112 übertragen. Durch diesen Schub des Schlittens 112 wird der andere der Deckel 13a, 13b über das Gestänge 11 geöffnet, bis die Deckel 13a, 13b ebenfalls in nahezu vertikale Richtung geöffnet sind. Alternativ dazu könnte die Öffnung des Aufnahmebehälters auch über einen mit dem Schlitten 112 der Schubgelenkgetriebeanordnung 110, in den Aufnahmebehälter 1 integrierten Antrieb, z.B. einem elektrischen, hydraulischen, elektrohydraulischen, elektropneumatischen, etc. Antrieb, erfolgen, wodurch sich insbesondere der Deckel 13a, der den Rücknahmeautomaten 9 trägt, besonders behutsam öffnen läßt, um eine Beschädigung des Rücknahmeautomaten 9 z.B. durch Aufschlagen auf dem Boden, vermeiden läßt. Als eine Alternative dazu kann die Deckelkonstruktion 13 auch über z.B. zwei oder mehrere Hydraulikzylinder geöffnet werden, die jeweils an einem der beiden Deckel 13a, 13b angreifen. Um die Deckelkonstruktion ohne Fremdantrieb von Hand öffnen zu können kann die Deckelkonstruktion 13 in einer weiteren Alternative schließlich auch mit einem oder mehreren auf das Gewicht der Deckelkonstruktion 13 abgestimmten Gasdruckzylindern zu versehen werden. Beispielsweise kann jeder der beiden Deckel 13a, 13b über einen oder mehrere Gasdruckzylinder mit einer in Öffnungsrichtung wirkenden Druckkraft beaufschlagt werden, die ergänzt durch die Kraft, wie sie von durchschnittlich gebauten Personen von Hand aufgebracht werden kann, ausreichend ist, um die Deckelkonstruktion 13 zu öffnen.

Die Größe und Schwere des Rücknahmeautomaten 9 kann derart angepaßt sein, daß der Deckel 13a nach Überschreiten seiner vertikalen Lage aufgrund der Gravitationskraft, welche durch den Rücknahmeautomaten 9 erzeugt wird, ein weiteres Drehmoment entsteht, wodurch beide Deckel 13a, 13b über die Verbindungsgestänge der Schubgelenkgetriebeanordnung 110 in Überkopflage gebracht werden, bis der Schlitten 112 an der Stopvorrichtung 114 anschlägt. Aufgrund dieser Konstruktion ist gewährleistet, daß die Deckel ohne weitere Haltevorrichtung in dieser Lage verbleiben, so daß die Sammelbehälter 3a, 3b, 3c aus dem Aufnahmebehälter 1 herausgenommen werden können.

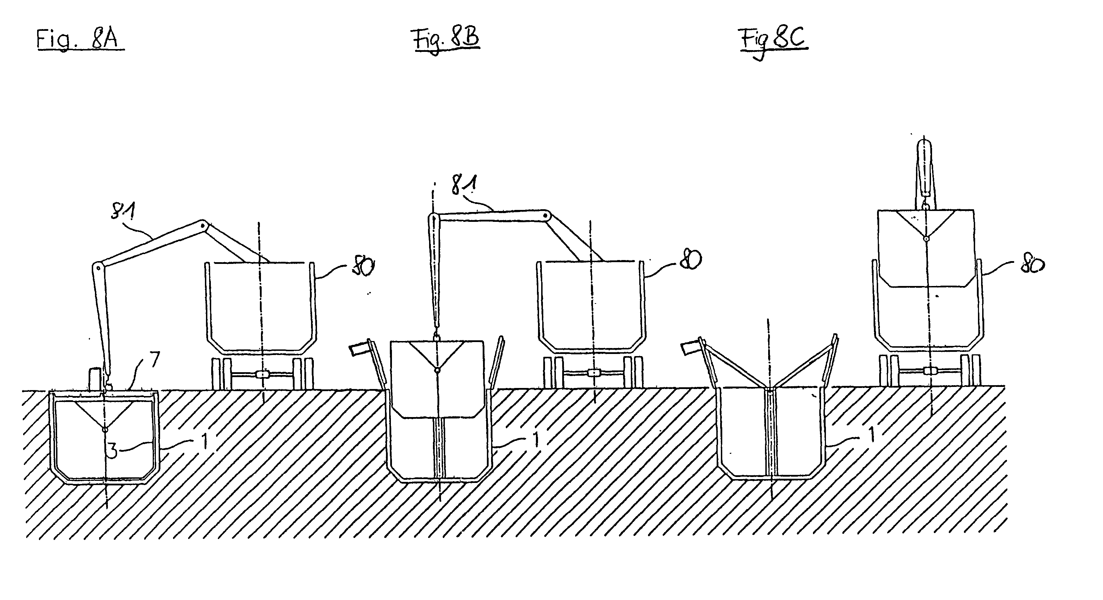

In Fig. 8 wird der Austauschvorgang eines Sammelbehälters 3 deutlicher dargestellt. Zuerst werden gemäß Fig. 8A mit einem Kranmechanismus 81 die Deckel 13a, 13b des Aufnahmebehälters 1 geöffnet. Aufgrund des gemäß Fig. 7 beschriebenen Mechanismus verbleiben die Deckel 13a, 13b des Aufnahmebehälters 1 selbständig in dieser geöffneten Stellung, so daß der Kranmechanismus 81 gemäß Fig. 8B einen Sammelbehälter 3 aus dem Aufnahmebehälter 1 entnehmen und in einen Transportbehälter 80 einsetzen kann (siehe Fig. 8C). Wie in Fig. 8A ebenfalls deutlich erkennbar ist, ist es von Vorteil, die Schubgelenkgetriebeanordnung samt Schlitten innenseitig in den Aufnahmebehälter 1 einzubringen, damit die Schlittenführung nicht durch Schmutz beeinträchtigt wird, was die Funktionstüchtigkeit des Gesamtsystems beeinträchtigen würde.

In der vorstehend erläuterten und in den Figuren 1, 2 und 4A gezeigten Ausführungsform sind im Aufnahmebehälter 1 drei in einer Reihe angeordnete Sammelbehälter 3a, 3b, 3c aufgenommen. An dieser Stelle sei angemerkt, daß das erfindungsgemäße Wertstoffsammelsystem eine beliebige Anzahl von mehreren Sammelbehältern aufweisen kann.

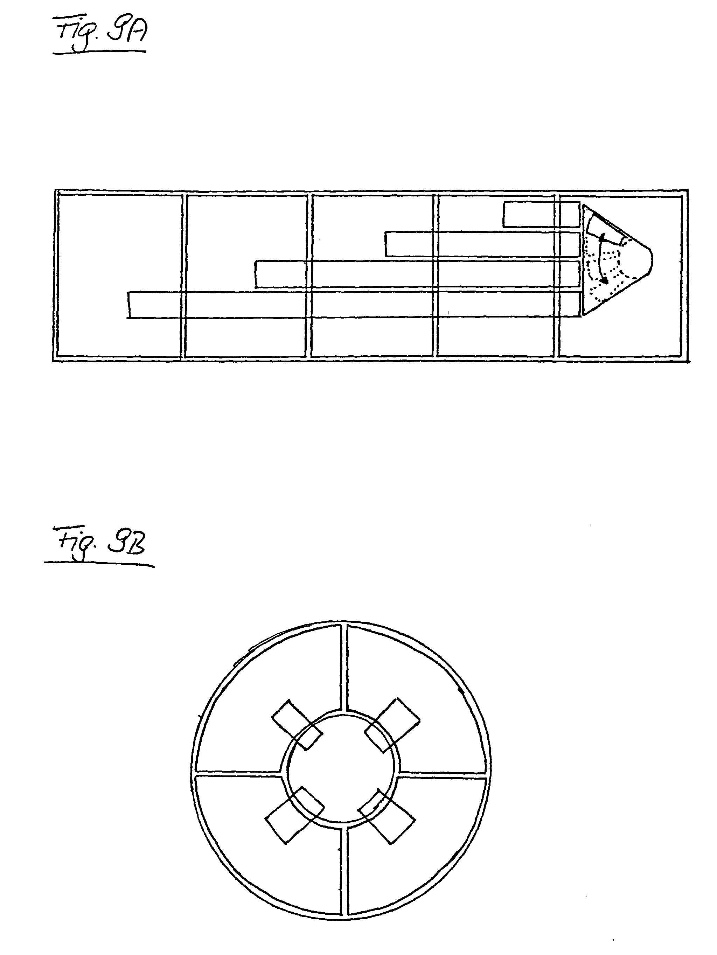

Fig. 9A und 9B zeigen schematisch weitere Möglichkeiten, wie mehrere Sammelbehälter in einem Aufnahmebehälter angeordnet werden können. In Fig. 9A ist eine Anordnung von fünf Sammelbehältern in einer Reihe gezeigt. Die Anordnung der Förderbänder wird dabei in erster Linie von der Anzahl und Anordnung der im Aufnahmebehälter vorgesehenen Sammelbehältern bestimmt. Sind die Sammelbehälter beispielsweise in einer Reihe hintereinander im Aufnahmebehälter vorgesehen, wie in Fig. 9A gezeigt, so könnte der Rücknahmeautomat unmittelbar über dem ersten Sammelbehälter angeordnet sein, wodurch die diesem ersten Sammelbehälter zugeordneten Wertstoffe unmittelbar aus dem Rücknahmeautomaten zugeführt werden, und die Verteilung der Wertstoffe auf die weiteren Sammelbehältern angefangen von dem zweiten Sammelbehälter über zu den Sammelbehältern führende, verschieden lange Förderbänder erfolgt, die nebeneinander angeordnet sind. Alternativ dazu kann der Rücknahmeautomat, insbesondere bei einer ungeraden Anzahl von in einer Reihe liegenden Sammelbehälter, entsprechend der in Fig. 4A gezeigten Anordnung, über dem mittleren Sammelbehälter positioniert sein, wodurch dieser unmittelbar aus dem Rücknahmeautomaten mit einem bestimmten Wertstoff gespeist wird, und ausgehend vom Rücknahmeautomaten die Verteilung weiterer Wertstoff-Fraktionen auf die jeweiligen Sammelbehälter über zu beiden Seiten des mittleren Sammelbehälters angeordnete Förderbänder erfolgen.

Alternativ dazu kann der Aufnahmebehälter in der Draufsicht kreisförmig ausgebildet sein, wobei die einzelnen Sammelbehälter konzentrisch um einen zentralen Sammelbehälter herum angeordnet sind. Dieses Beispiel ist in Fig. 9B schematisch dargestellt. Hier bietet es sich an, den Rücknahmeautomaten über dem zentralen Sammelbehälter anzuordnen und die Verteilung der Wertstoffe zu den weiteren Sammelbehältnissen über entsprechend sternförmig angeordnete Förderbänder zu bewerkstelligen, die in diesem Fall jeweils dieselbe Länge aufweisen können.

Des weiteren können die Sammelbehälter in einem entsprechend ausgebildeten Aufnahmebehälter sternförmig angeordnet sein.

In der vorstehend erläuterten Ausführungsform beinhaltet der Rücknahmeautomat 9 ein Erkennungs- und Selektiersystem zum automatischen Erkennen und sortenreinen Selektieren der über ein und dieselbe Einwurföffnung (mit dem Bezugszeichen 91 in Fig. 1 angedeutet) am Rücknahmeautomaten 9 aufgenommenen, verschiedenartigen Wertstoffe.

Alternativ dazu kann eine Selektion verschiedenartiger Wertstoffe auch dadurch erfolgen, daß am Rücknahmeautomaten mehrere, den verschiedenartigen Wertstoffen zugeordnete Einwurföffnungen vorhanden sind, die mit dem im Rücknahmeautomaten vorgesehenen Schachtsystem verbunden sind. Ein Erkennungs- und Selektiersystem kann jedoch auch in diesem Fall nützlich sein, um nicht für den Sammelbehälter bestimmte Wertstoffe zu erkennen und deren Annahme zu verweigern.

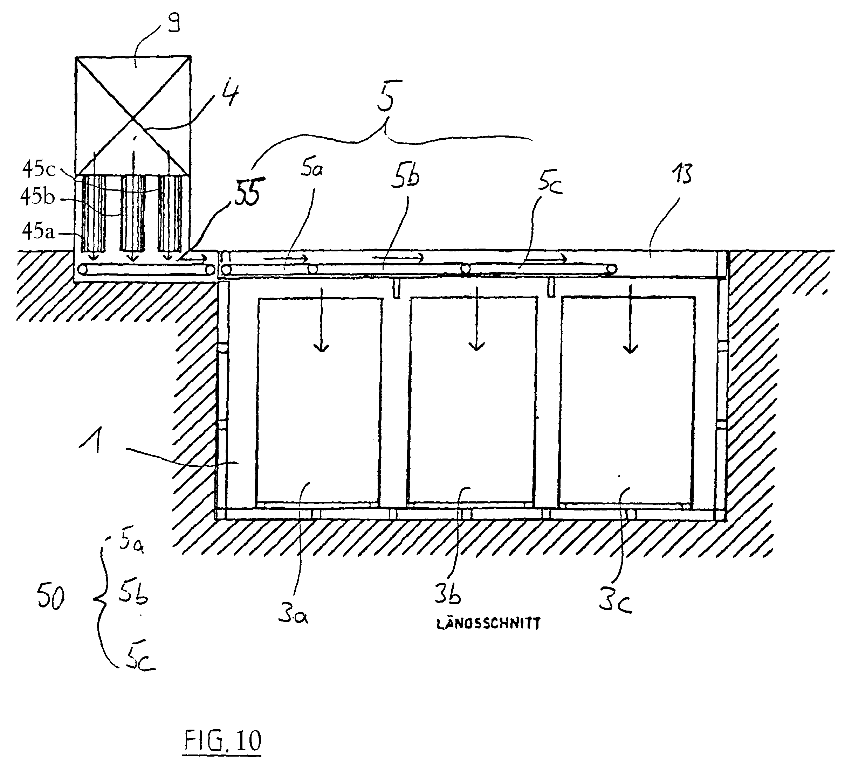

Im folgenden wird auf Fig. 10 Bezug genommen, die eine Ausführungsform der Erfindung zeigt. Mit dem Bezugszeichen 1 ist ein Aufnahmebehälter dargestellt. Der Aufnahmebehälter 1 in Bodenbehälterausführung ist räumlich getrennt von einem Wertstoffrücknahmesystem 9, 4 angeordnet. Das Wertstoffrücknahmesystem 9, 4 besteht aus einem Rücknahmeautomat 9 und einem darin integrierten Wertstofferkennungs- und Selektiersystem 4. Der Rücknahmeautomat 9 befindet sich oberhalb des Bodenbehälters 1 in einem an den Aufnahmebehälter 1 grenzenden Bereich und ist mit einem Transportband 55, das unterhalb der Erdoberfläche angeordnet ist, mit dem Bodenbehälter 1 verbunden. An das zum Aufnahmebehälter 1 hinführende Transportband 55 schliessen sich weitere, in eine Deckelkonstruktion 13 des Bodenbehälter 1 integrierte Transportbänder 5a, 5b, 5c an, die ein behälterinternes Fördersystem 50 bilden, das die Wertstoffe vom Transportband 55 am Behälterrand aus übernimmt und an den Wertstofffraktionen zugeordnete Sammelbehälter 3a, 3b, 3c weiterverteilt. Das Transportband 55 und das behälterinterne Fördersystem bilden somit ein Leitsystem 5 zwischen dem Wertstoffrücknahmesystem 9, 4, bzw. dem Rücknahmemodul des Wertstoffsammelsystems und dem Zwischenlagerungsmodul, d.h. dem Aufnahmebehälter 1 mit den Sammelbehältern 3a, 3b, 3c.

Es muss erwähnt werden, dass der Rücknahmeautomat 9 nicht in unmittelbarer Nähe des Bodenbehälters 1 angeordnet sein muss, sondern auch entfernter plaziert werden kann, solange er auf geeignete Weise mit den Sammelbehältern 3a, 3b, 3c im Bodenbehälter 1 verbunden wird. Auf diese Weise sind Wertstoffrücknahmemodul 9, 4 und Zwischenlagerungsmodul 1, 3a, 3b, 3c räumlich und funktional entkoppelt, so dass Aufstellungsorte gemäss den unterschiedlichen Funktionen gewählt werden können.

Die drei Sammelbehälter 3a, 3b, 3c im Aufnahmebehälter 1 sind in dieser bevorzugten Ausführungsform in Gestalt herausnehmbarer und transportabler Sammelbehälter 3a, 3b, 3c aufgenommen, die jeweils gleich ausgestaltet sind und jeweils über das zugeordnete Transportband 5a, 5b, 5c vom Wertstoffrücknahmesystem 9, 4 beschickt werden. Die vollen Sammelbehälter 3a, 3b, 3c lassen sich zum Zweck der Entleerung oder des Austauschs gegen leere Sammelbehälter aus dem Aufnahmebehälter herausnehmen. Grundsätzlich könnten die Sammelbehälter aber auch z.B. in Form von Sammelfächern fest in den Aufnahmebehälter integriert bzw. einstückig mit diesem ausgebildet sein. In diesem Fall könnte die Entleerung voller Sammelbehältnisse z.B. durch Absaugung erfolgen.

Das Wertstoffrücknahmesystem 9, 4 gliedert sich in einen Rücknahmeautomaten 9, in dem der Wertstoff entgegengenommen wird, und der zur Trennung der unterschiedlichen Wertstoff-Fraktionen drei Einwurfschächte beinhaltet, und ein Wertstofferkennungs- und Selektiersystem 4 (hier durch das untere Dreieck symbolisiert), das durch entsprechende Einwurfschächte (nicht gezeigt) geworfene Wertstoffe sortenrein trennt und durch entsprechende Ausgänge, bzw. Ausgangsfallschächte 45a, 45b, 45c auf das Transportband 55 liefert, das die Wertstoffe an den Rand des Behälter und damit an dessen Förder-, bzw Verteilersystem 50 (d.h. an die TRansportbänder 5a, 5b, 5c) liefert.

In der gezeigten Ausführungsform sind die Ausgangsschächte 45a, 45b, 45c in bezug zum Behälterrand hintereinander angeordnet. Das Transportband 55 kann in diesem Fall durch ein schwenkbar angeordnetes Förderband ausgeführt sein, das durch die Steuerung des Wertstofferkennungs- und Selektiersystems 4 an das der eingeworfenen Wertstofffraktion entsprechende Transportband 5a, 5b, 5c verschwenkt wird.

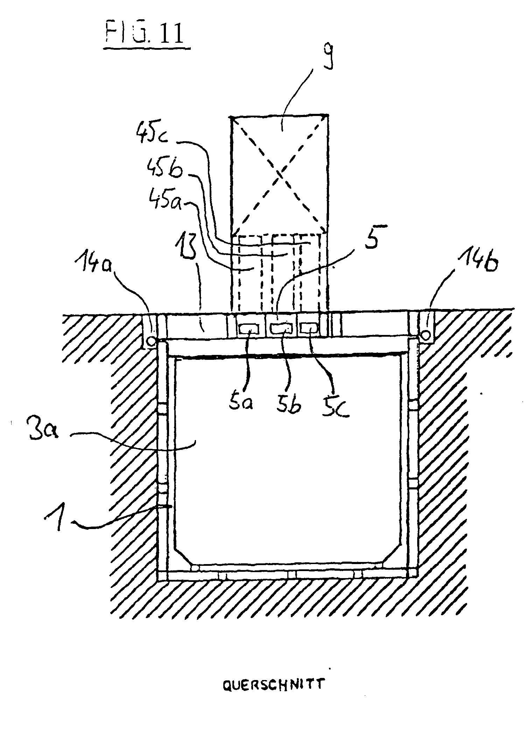

In Fig. 11 ist ein Querschnitt eines erfindungsgemässen Wertstoffsammelsystems mit selbigen Aufnahmebehälter 1 in einem in das Erdreich eingebauten Zustand gezeigt. Die Einbautiefe des Aufnahmebehälters 1 ist derart gewählt, daß die Deckel 13 oberseitig mit der angrenzenden Erdreichoberfläche abschließen. Die Deckel 13 sind über Scharniere 14a, 14b an den Längsseiten des Behälters 1 angelenkt.

An dieser Stelle sei angemerkt, daß die Deckelkonstruktion grundsätzlich mit unterschiedlichen Belägen, z. B. Strukturblech, Fallschutzplatten, Steinplatten, Epoxidharz mit Quarzsandeinstreung und dergleichen, versehen werden können. Auf diese Weise ist es je nach den individuellen Bedürfnissen möglich, das Zwischenlagerungsmodul 1, 3a, 3b, 3c des Wertstoffsammelsystems entweder möglichst unauffällig in die umgebende Fläche einzubinden oder aber es im bewußten Kontrast von der umgebenden Fläche abzuheben.

Durch die in Richtung der Förderbänder 5a, 5b, 5c verlaufenden Anlenkscharniere 7a, 7b können die Deckel 13 auf einfache Weise geöffnet werden, da die Förderbänder 5a, 5b, 5c mit einem der Deckel mitverschwenkt werden können.

Fig. 11 zeigt weiter ein im Rücknahmeautomaten 9 vorgesehenes Schachtsystem mit drei in diesem Querschnitt nebeneinanderliegenden Schächten 45a, 45b, 45c, über das die durch den Rücknahmeautomaten 9 entsprechend den drei Wertstoff-Fraktionen selektierten Wertstoffe über das Leitsystem 5 und das behälterinterne Fördersystem (Transportbänder 5a, 5b, 5c), zu den jeweiligen Sammelbehältern 3a, 3b, 3c gelangen.

Das Leitsystem 5 kann hier durch nebeneinander liegende Förderbänder realisiert sein, die an die Förderbänder 5a, 5b, 5c direkt anschliessen und unterirdisch auf fest vorgegebenen Bahnen verlaufen, so dass eingeworfene Wertstoffe jeweils auf dem der Wertstoffklasse zugeordneten Band an den Behälter 1 geliefert werden.

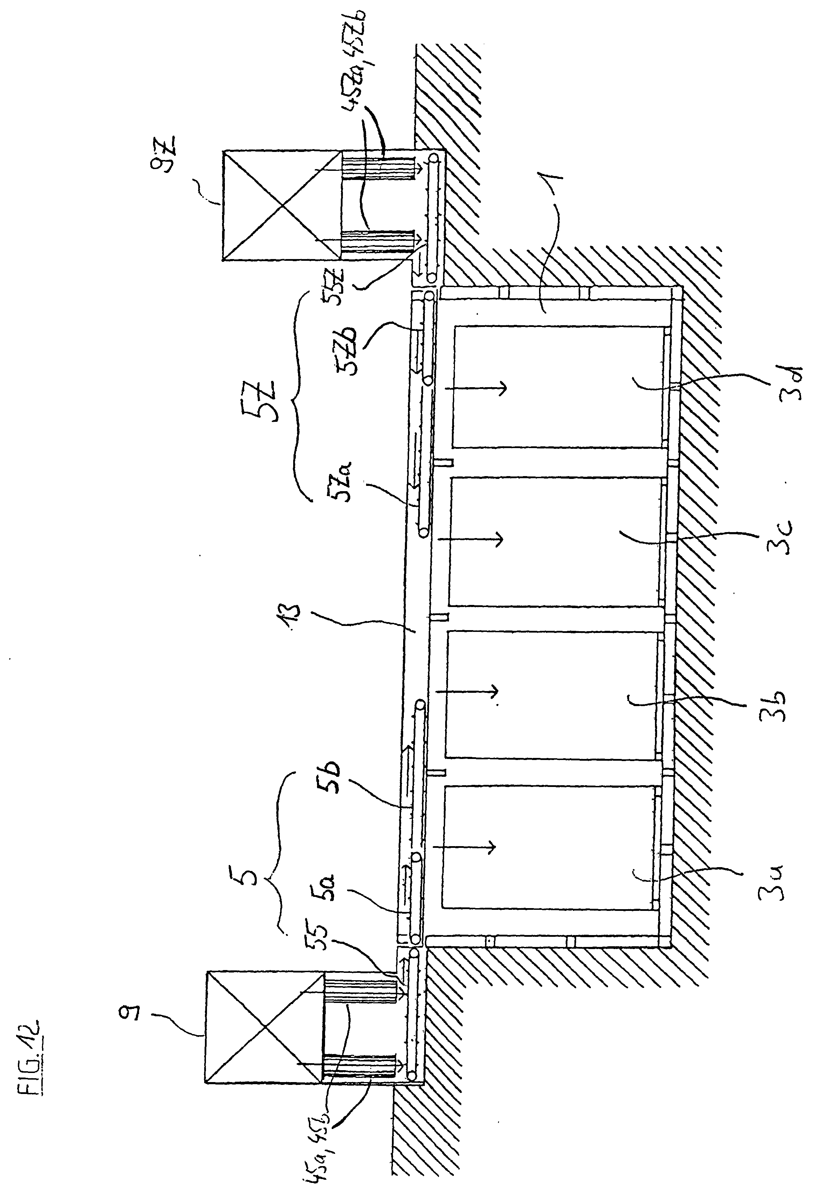

In Fig. 12 ist eine Ausführungsform der Erfindung dargestellt, bei der ein Bodenbehälter 1 mit vier Aufnahmebehältern 3a, 3b, 3c, 3d vom Rücknahmeautomat 9 und einem Zusatzrücknahmeautomaten 9Z über jeweils nachgeordnete Förderbandanordnungen 55 und 5a, 5b sowie 55Z und 5Za, 5Zb gespeist wird. Die Wertstoffsammelanlage ist dafür bestimmt, das pro Rücknahmeautomat 9, 9Z zwei Wertstoffklassen angenommmen werden, so dass die Wahrscheinlichkeit, dass ein Rücknahmeautomat belegt ist im Gegensatz zu Anlagen mit nur einem Rücknahmeautomaten signifikant gesenkt wird.

In der gezeigten Ausführungsform wird das Wertstofferkennungs- und Selektionssystem durch jeweils zwei in den jeweiligen Rückgabeautomaten 9, 9Z integrierte Einwurfsschächte (nicht gezeigt) realisiert, die entsprechend der einzuwerfenden Wertstofffraktion gekennzeichnet sind, so dass der Benutzer die Trennung implizit beim Einwurf vornimmt. Durch die Ausgänge 45a, 45b, bzw. 45Za, 45Zb fallen die in Fraktionen getrennten Wertstoffe dann auf die Transportbänder 55, bzw. 55Z, von wo aus sie über diese Zuleitförderbänder 55, 55Z jeweils an entgegengesetzte Seiten des Bodenbehälters 1 befördert werden. Weiter werden die jeweils zwei sortenrein getrennten Wertstoff-Fraktionen von den beiden Seitenrändern aus über Förderbänder 5a, 5b auf der einen und 5Za, 5Zb auf der anderen Seite auf die im Bodenbehälter 1 in einer Reihe stehenden Sammelbehälter 5a, 5b, 5c, 5d, verteilt, so dass also pro Rücknahmeautomat 9, 9Z je zwei sortenrein zu befüllende Sammelbehälter 3a, 3b, 3c ,3d beschickt werden.

Denkbar wäre es aber auch, zwei Rücknahmeautomaten, die jeweils vier Wertstoffklassen annehmen und alle vier Sammelbehälter sortenrein beschicken, vorzusehen. Dies kann auf einfache Weise realisiert werden, indem entsprechende Fördereinrichtungen nachgeordnet werden. Eine solche Anordnung kann durch die räumliche Trennung sowohl der Wertstoffrücknahme von der Wertstofflagerung als auch der beiden Rücknahmeeinheiten 9, 9Z Laufwege verkürzen helfen und eine erhöhte Frequentierung der Anlage ermöglichen.

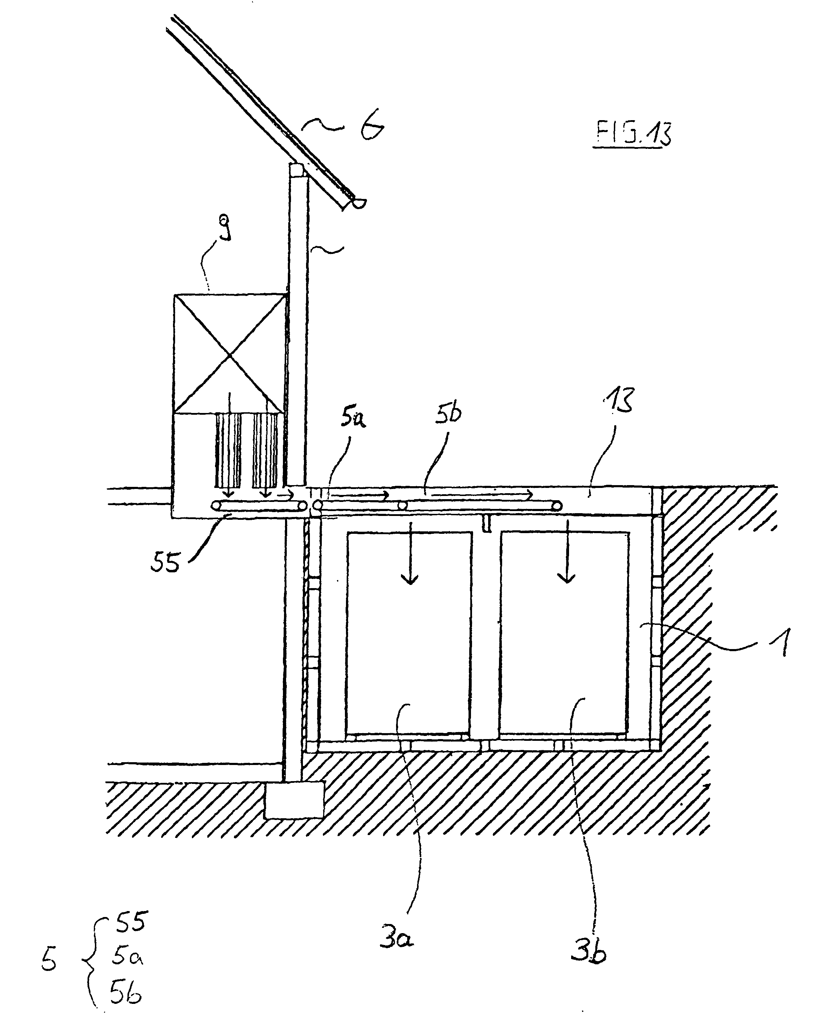

Wie in Figur 13 gezeigt, kann ein erfindungsgemässes Wertstoffsammelsystem auch einen in ein Gebäude G integrierten Wertstoffrücknahmeautomaten 9 umfassen. Vorteilhaft dabei ist der Schutz vor Witterungseinflüssen sowie erhöhte Akzeptanz seitens des Verbrauchers, dem eine bequeme Rückgabe der Wertstoffe ermöglicht wird.

In der dargestellten Ausführungsform enthält der als Bodenbehälter ausgeführte Aufnahmebehälter 1 zwei herausnehmbare Sammelbehälter 3a, 3b, die wiederum über ein behältereigenenes Föder, bzw. Verteilersystem, bestehend aus zwei Förderbändern 5a, 5b, die in die Deckelkonstruktion 13 des Aufnahmebehälters integriert sind, mit den sortenrein an den Behälterrand anzuliefernden Wertstoffen sortenrein befüllt werden. Der in das Gebäude 20 integrierte Rücknahmeautomat 9 beinhaltet zwei Einwurfschächte, über die die Wertstoffeinheiten selektiv auf ein unterirdisch verlaufendes TRansportband 55 gelangen, mit der die Wertstoffe an den Behälterrand transportiert werden.

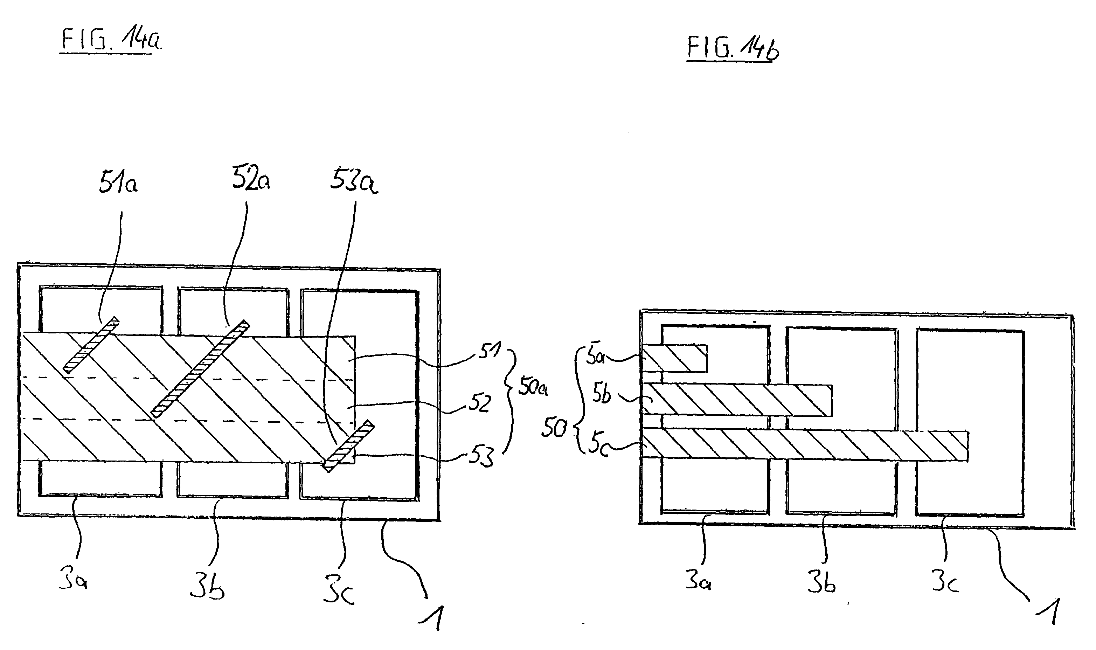

In den Figuren 14a, 14b zeigt das Bezugszeichen 50a in Fig. 14a und 50 in 14b das behältereigenen Fördersystem 50; 50a, das erfindungsgemäß die Funktion hat, den Sammelbehältern 3a, 3b, 3c Wertstoffe verschiedenartiger Materialien, in dieser Ausführungsformen drei Wertstoff-Fraktionen, z.B. Weißblech, Glas oder PET, sortenrein zuzuführen.

Das Verteilersystem 50a in Figur 14a ist als eine Förderbandanordnung gebildet aus einem Förderband ausgestaltet, das die je nach Wertstoff-Fraktion an der Schmalseite des Bodenbehälters an verschiedenen Breitenkoordinaten ankommenden Wertstoffe jeweils auf zugehörigen Breitenabschnitten 51, 52, 53 über die Länge des Bodenbehälters 1 befördert, bis über den jeweiligen Sammelbehältern 3a, 3b, 3c angebrachte Umlenkvorrichtungen 51a, 52a, 53a, hier unter Winkel an den Behälterdeckel angebrachte Anschläge 51a, 52a, 53a, selektiv die Stücke der jeweiligen Wertstoff-Fraktion erfassen und in das zugehörige Sammelbehältnis 3a, 3b, 3c lenken. Die Breitenabschnitten 51, 52, 53 weisen in dieser Ausführungsform eine gleiche Breite auf, was aber, besonders im Hinblick auf in den Wertstoff-Fraktionen unterschiedlich gross ausfallende Stücke, nicht zwingend ist.

Wie aus Fig. 14b ersichtlich ist, kann ein erfindungsgemässes Verteilersystem 50 auch aus einer Förderbandanordnung mit drei Einzelförderbändern 5a, 5b, 5c gebildet werden, wobei die je nach Wertstoff-Fraktion an der Schmalseite des Bodenbehälters an verschiedenen Breitenkoordinaten ankommenden Wertstoffe jeweils auf zugeordneten Förderbändern 5a, 5b, 5c über die Länge des Bodenbehälters 1 befördert werden, bis sie am Ende des jeweiligen Förderbands in den entsprechenden Sammelbehälter 3a, 3b, 3c fallen.

Der Antrieb der Förderbänder 5a, 5b, 5c bzw. 50a erfolgt vorzugsweise über einen ebenfalls in die Deckelkonstruktion des Aufnahmbehälters 1 integrierten Elektromotor, der in den Figuren allerdings nicht gezeigt ist.

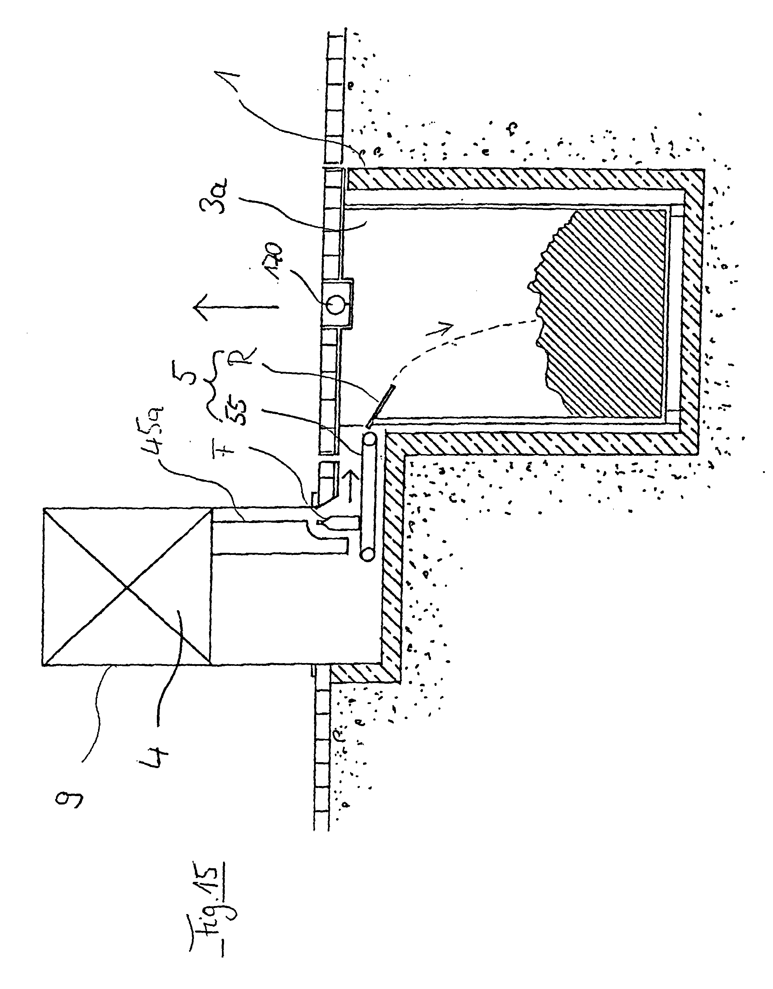

In Fig. 15 ist ein erfindungsgemässes Wertstoffsammelsystem dargestellt Es weist einen Rücknahmeautomaten 9 mit integriertem Wertstofferkennungs- und Selektiersystem 4 (durch das untere Dreieck symbolisiert) auf, das über einen als Fallschacht ausgebildeten Ausgang 45a und ein als unterirdisch verlaufendes Förderband mit Abschlussrampe R ausgebildetes Leitsystem 50 mit einem Sammelbehälter 3a verbunden ist. Der Sammelbehälter 3a befindet sich in einem als Bodenbehälter ausgeführten, ortsfesten Aufnahmebehälter 1. Die Deckelkonstruktion des Aufnahmebehälters 1 schliesst mit der Erdoberfläche ab. Dabei kann der Aufnahmebehälter geöffnet werden, indem an dem an der Deckelkonstruktion angebrachten Ring in Pfeilrichtung gezogen wird, und so die oben beschriebenen beiden Halbdeckel aufklappen

Die in den Rücknahmeautomat eingeworfene Flasche F befindet sich auf dem motorisch betriebenen Förderband 55, dass durch einen unterirdisch verlaufenden Schacht bis zum Rand des Aufnahmebehälters 1 führt. Dort ist eine schiefe Rampe R angeschlossen, über die das Fördergut in den Sammelbehälter derart rutscht, dass die Spitze des resultierenden Schüttkegels von den Seitenwänden genügend weit entfernt ist, um eine gleichmässige Verteilung des Füllguts im Behälter zu gewährleisten.

Am Ende des Förderbands 55 kann noch eine Entwertungs- bzw. Zerstörungseinrichtung vorgesehen sein, mittels der die Eingeworfenen Wertstoffe zerstört und damit entwertet werden können um so - im Falle einer Bepfandung - einen Mehrfacheinwurf zu verhindern und das Volumen der einzulagernden Wertstoffe zu verringern. Diese Entwertungs- bzw. Zerstörungseinrichtung kann durch zwei gegenlaufende Walzen realisiert werden, die ebenso wie das Förderband 55, von der Steuerung der Wertstofferkennungs- und Selektiersystem 4 an, bzw. abgeschaltet werden.

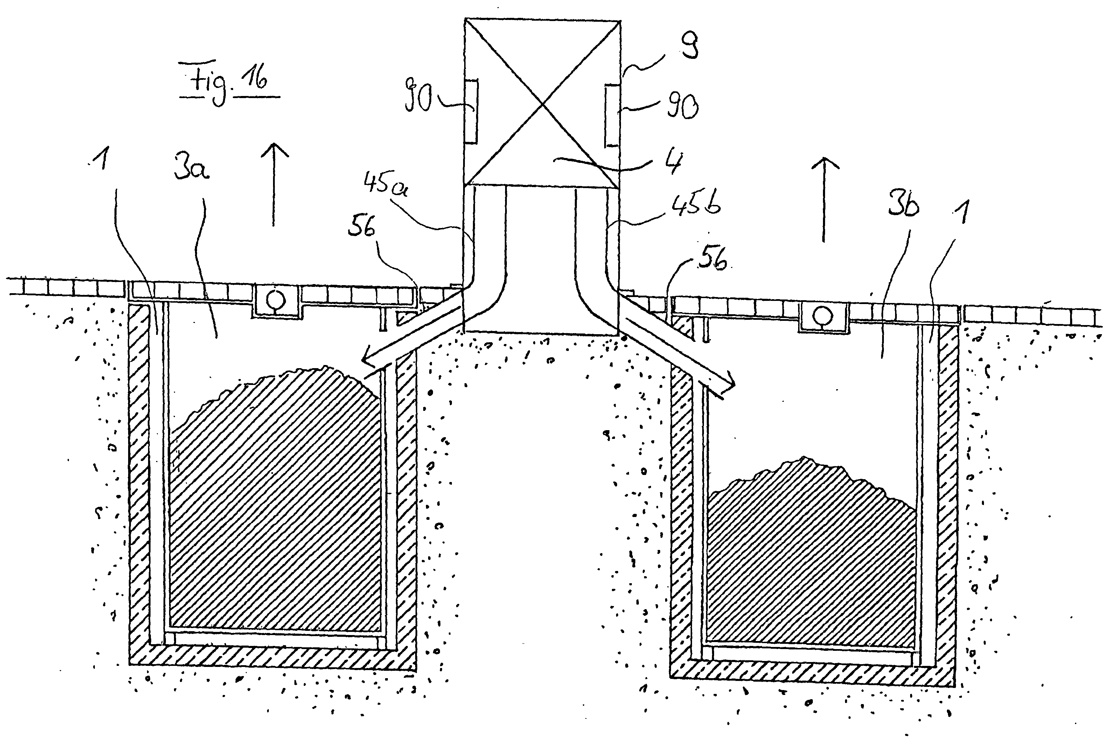

Fig. 16 zeigt ein Wertstoffrücknahmesystem mit einem Rücknahmeautomat 9 und zwei in getrennten Aufnahmebehältern 1 angeordnete Sammelbehälter 3a, 3b, wobei die Wertstoffe, die in die Annahmeeinrichtungen (nicht dargestellt) der Benutzerbedieneinheiten 90 des Rücknahmeautomats 10 eingegeben werden, über zwei Fallschächte den Sammelbehältern 1 zugeführt werden. Die oberen Abschnitte der Fallschächte bilden dabei die Ausgänge 45a, 45b eines zwischengeschalteten Wertstofferkennungs- und Selektiersystems 4 (symbolisch angedeutet durch das untere Dreieck). Die unteren Abschnitte 56 der Schächte das Leitsystem und sind in einem Winkel zur Erdoberfläche unterirdisch angeordnet und bilden in dieser Ausführungsform das Leitsystem zwischen Rücknahmeautomaten 9 und den Einzelbehältermodulen, bestehend aus je einem Aufnahmebehälter 1 und Sammelbehälter 3a, 3b. Der Rücknahmeautomat 9 ist oberhalb der Behälter angeordnet, so dass durch Ausnutzung der Schwerkraft zur Beförderung des Verwertungsmaterials in dieser Ausführungsform kein weiterer motorischer Antrieb nötig ist. Allerdings können die Sammelbehälter 3a, 3b in dieser Ausführungsform nicht bis zum Rand befüllt werden, da die Schächte 50 nicht ganz am oberen Ende der Seitenwände der Behälter 3a, 3b schief einmünden. Auch in dieser Ausführungsform ist jeweils am behälterseitigen Ende der Schachtanordnung 45a, 45b, 56 eine Zuleitrampe R vorgesehen, um die Materialverteilung zu optimieren.

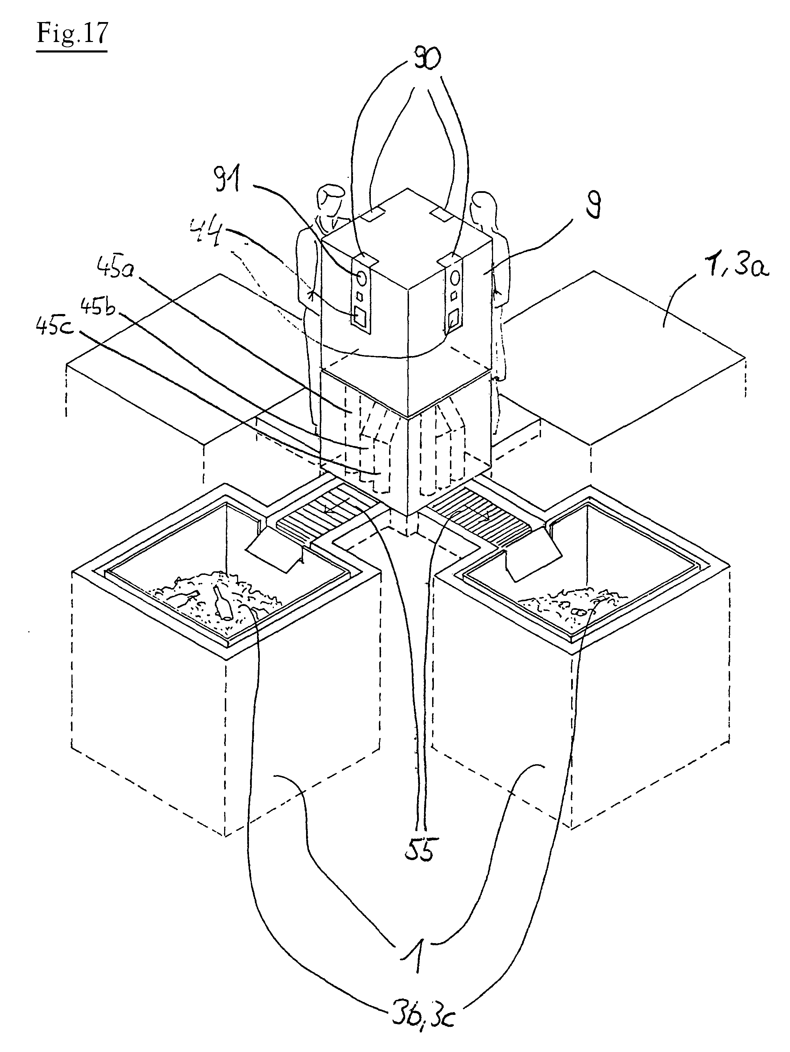

Wie in Fig. 17 gezeigt, kann ein erfindungsgemässes Wertstoffsammelsystem von mehreren Benutzern gleichzeitig bedient werden. In der dargestellten Ausführungsform sind dafür an einem Rücknahmeautomaten 9 vier Benutzerbedieneinheiten 90 jeweils mit einer Annahmeeinrichtung 91 und einem Ausgang, bzw einer Rückgabeöffnung 44 vorgesehen. Falsch eingeworfenen Stoffe werden über die Rückgabeöffnung 44 zurückgewiesen, verwertbare Stoffe über die Annahmeeinrichtung, bzw. Einwurföffnung 91 dem Erkennungsund Selektiersystem (nicht gezeigt) zugeführt, dessen Ausgangsschächte 45a, 45b, 45c (gestrichelt gezeichnet) das Einwurfgut auf Förderbänder 55 leiten, die den jeweiligen Wertstofffraktionen zugeordnet sind und zusammen das Leitsystem zu den jeweiligen Sammelbehältern 3a, 3b, 3c bilden. Zu jedem Einzelförderband führen mehrere Rohre, da jede Benutzerbedieneinheit 90 mehrere Wertstoffsorten annehmen kann und daher mit den den einzelnen Wertstofffraktionen entsprechenden Förderbändern 50 vernetzt sein muss. Die Förderbandanordnung führt jeweils an den Rand einer der vier Aufnahmebehälter 1/Sammelbehälter 3a, 3b, 3c - Kombinationen, wo eine Rampe den Transportweg des Einwurfgutes abschliesst.

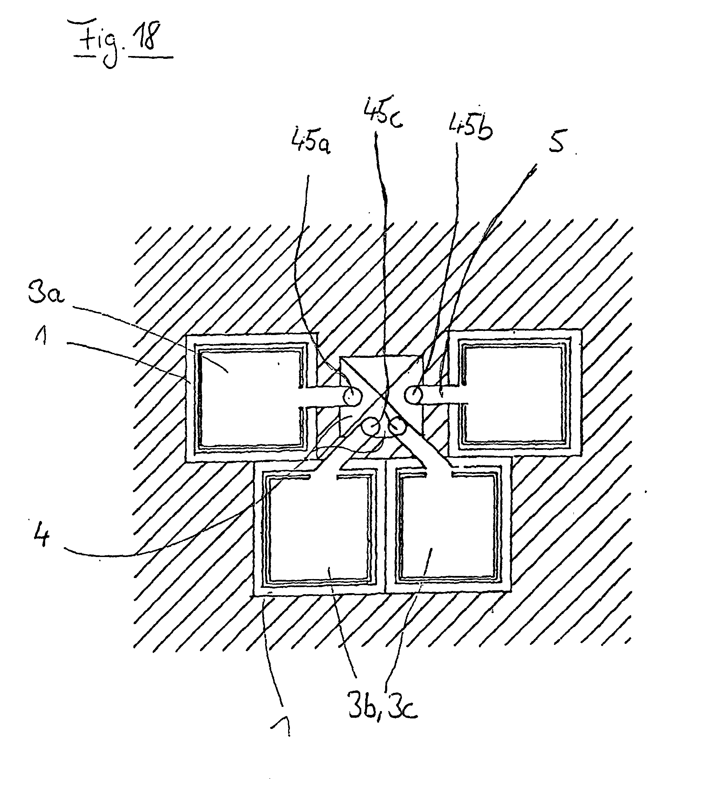

Wie in Fig. 18 gezeigt, kann ein erfindungsgemässes Wertstoffsammelsystem auch gemischt Einzelbehältermodule umfassen, die jeweils aus einem Aufnahmebehälter 1 mit einem Sammelbehälter 3a bestehen, und Aufnahmebehälter 1 mit mehreren Innensammelbehältern 3b, 3c. Dabei kann eine Gruppierung der den Wertstofffraktionen zugeordneten Sammelbehältern 3a, 3b, 3c entsprechend der Bearbeitung der Wertstofffraktionen im Rücknahmeautomaten erfolgen: An den beiden seitlich gelegenen Ausgängen 45a, 45b kommt jeweils eine Wertstofffraktion an, die von einem jeweils durch ein eigenenes Dreieck symbolisiertes Einzel-Erkennungs- und Selektiersystem 4 (EuS) des Rücknahmeautomaten 9 kommt, also beispielsweise von einer nur mit diesem Einzel-EuS 4 verbundenen, nur zur Annahme einer Wertstofffraktion vorgesehenen Benutzerbedieneinheit. Andererseits kommen an den vorne gelegenen Ausgängen 45c zwei Wertstofffraktionen aus einem EuS 4 an, die beispielsweise an einer beiden Fraktionen zugeordneten Benutzerbedieneinheit 90 eingegeben wurden und von dem EuS 4 voneinander getrennt wurden. Die Fraktionen werden über das Leitsystem 5 den Sammelbehältern 1 zugeführt, davon zwei Fraktionen an Einzelbehältermodule 1, 3a und zwei Fraktionen an zwei in einem Aufnahmebehälter 1 zusammengefassten Sammelbehälter 3b, 3c.

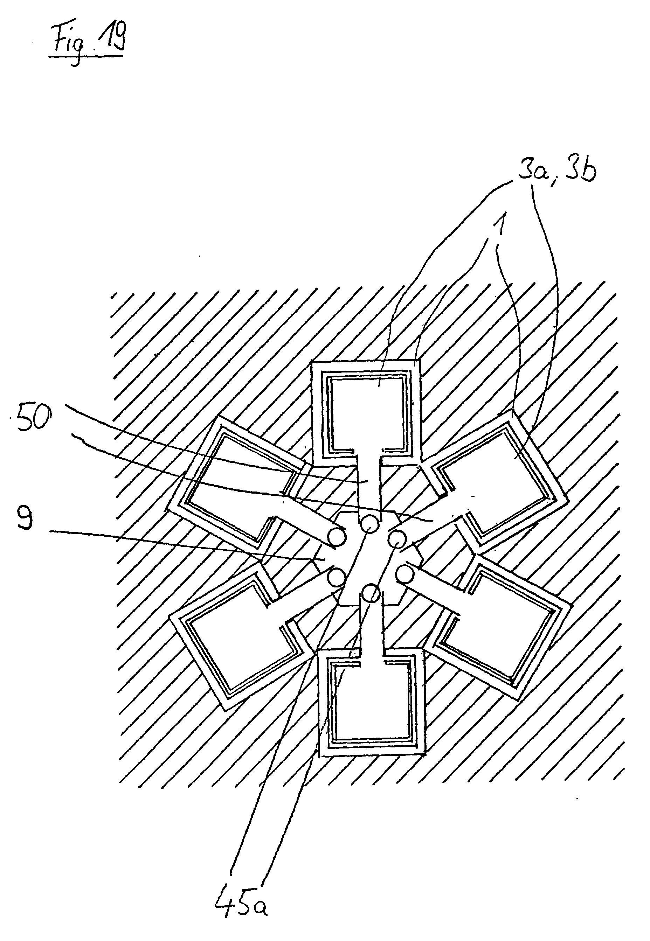

Wie in Fig. 19 gezeigt, kann das Wertstoffsammelsystem mit einer Vielzahl von Einzelbehältermodulen, die jeweils aus einem Aufnahmebehälter 1 mit einem Sammelbehälter 3a, 3b bestehen, beispielsweise sechs Einzelbehältermodulen 1, 3a; 1, 3b ausgeführt sein, die symmetrisch um einen Rücknahmeautomaten 9 herum angeordneten sind. Die dargestellte Ausführungsform verkörpert ein Wertstoffsammelsystem, bei dem jede an einer Seitenfläche des sechseckigen Rücknahmeautomaten 9 vorgesehene Benutzerbedieneinheit (nicht dargestellt) 1:1 jeweils einen der sternförmig um den Rücknahmeautomaten 9 angeordneten Einzel-Behälter 1, 3a; 1, 3b über jeweils einen Ausgang 45a und ein Leitsystem 50 beschickt.

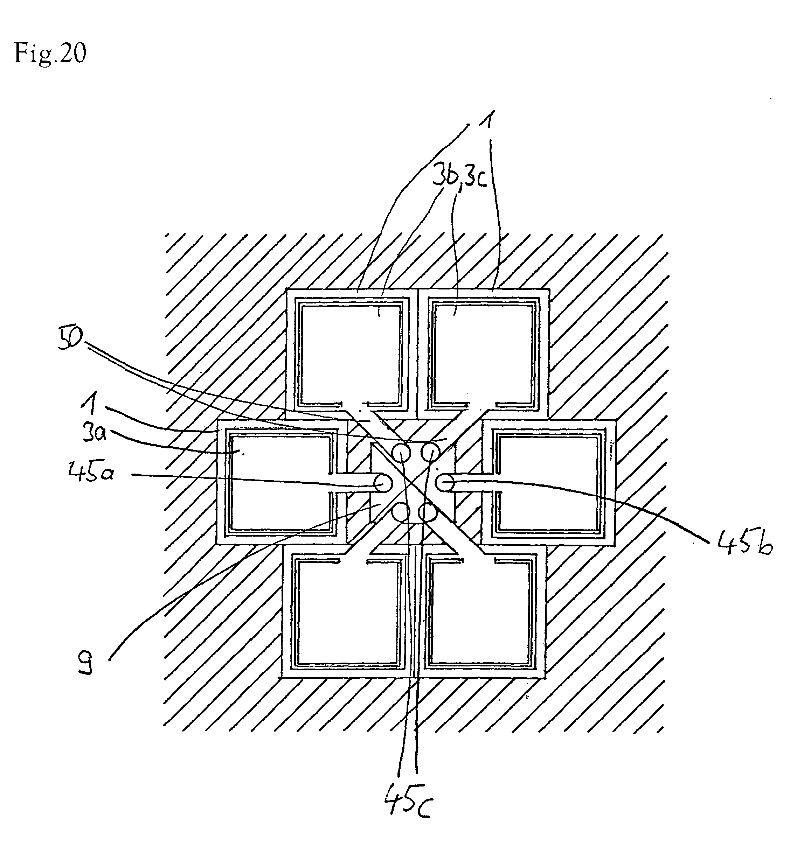

Fig. 20 zeigt in der Erdoberflächenebene ein Wertstofffsammelsystems mit vier Benutzerbedieneinheiten (nicht dargestellt), von denen die einen zwei jeweils einen der um einen Rücknahmeautomaten 9 herum angeordneten Einzel-Behältermodule 1, 3a beschicken und die anderen zwei jeweils zwei Sammelbehälter 3b, 3c beschicken, die beide in je einem Aufnahmebehälter 1 zusammengefasst sind. Die Verbindung des Rücknahmeautomaten 9 mit den Sammelbehältern 3a, 3b, 3c erfolgt über Ausgangskanäle 45a, 45b, 45c und ein Leitsystem 50.

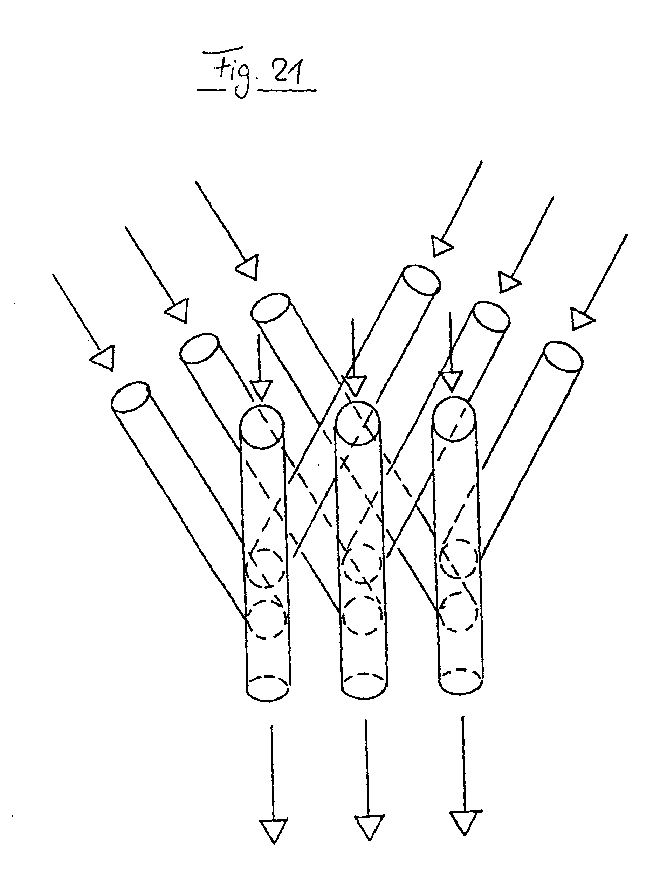

Fig. 21 zeigt ein Beispiel für die interne Verrohrung eines Rücknahmeautomaten für drei Wertstofffraktionen, die pro Wertstofffraktion drei Eingänge und einen Ausgang vorsieht, also beispielsweise drei Benutzerbedieneinheiten hat, die jeweils drei Einwurföffnungen für die drei Wertstofffraktionen vorsehen.

Fig. 22 zeigt ein Bodenbehälter-Einzelmodul aus dem Stand der Technik, wobei die kippbare Einwurfsäule X3 mit Verriegelung X2, Einwurföffnung X1, und Einwurfkanal X4 auf dem Behälterdeckel integriert ist.

Die vorstehend erläuterten Systeme und Merkmale können im Umfang des Patentanspruchs 1 selbstverständlich beliebig zu weiteren Ausführungsformen kombiniert werden.

Die Erfindung verkörpert sich somit in den Merkmalen der nebengeordneten Ansprüche und - gemäss vorteilhafter Weiterbildungen - in den folgenden Merkmalen, die jeweils für sich allein und in jedweder für den Durchschnittsfachmann sinnvollen Kombination mit den Gegenständen der nebengeordneten Ansprüche kombinierbar sind:

Punkt 1: Der zumindest eine Aufnahmebehälter ist als begehbarer Bodenbehälter ausgeführt.

Punkt 2: Der Aufnahmebehälter ist ein mittels einer Stützstruktur verstärkter, unterirdisch eingebauter Bodenbehälter, und die Deckelkonstruktion liegt im wesentlichen auf Höhe der Bodenoberfläche.

Punkt 3: Der zumindest eine Sammelbehälter ist transportabel und im geöffneten Zustand des zumindest einen Aufnahmebehälters herausnehmbar.

Punkt 4: Der zumindest eine Aufnahmebehälter ist in der Form eines nach oben offenen Quaders ausgebildet.

Punkt 5: Die Deckelkonstruktion ist aus zwei Deckeln gebildet, die an einander gegenüberliegenden Seitenwandungen des Aufnahmebehälters angelenkt sind.

Punkt 6: Die rechteckförmigen Deckel sind jeweils an einer der längeren Seitenwandungen des Aufnahmebehälters angelenkt.

Punkt 7: Die Deckel liegen über eine umlaufende Dichtung auf der oberen Stirnseite der Seitenwandung des zumindest einen Aufnahmebehälters auf.

Punkt 8: Die Deckel überlappen einander im geschlossenen Zustand im Bereich der Stosslinie und sind gegeneinander abgedichtet.

Punkt 9: Die Deckelkonstruktion ist innenseitig mittels einer gitterartigen Stützstruktur verstärkt.

Punkt 10: Der Rücknahmeautomat ist oberhalb der Deckelkonstruktion vorgesehen.

Punkt 11: Der Rücknahmeautomat ist aussenseitig an der Deckelkonstruktion vorgesehen.

Punkt 12: Der Rücknahmeautomat ist im wesentlichen zentral an der Oberfläche der Deckelkonstruktion des Aufnahmebehälters angeordnet.

Punkt 13: Die Deckel des Aufnahmebehälters sind unterschiedlich breit und der Rücknahmeautomat ist in der Weise an dem breiteren Deckel angebracht, dass er im geschlossenen Zustand des Aufnahmebehälters im wesentlichen im Bereich der Längssymmetrieebene des Aufnahmebehälters liegt.

Punkt 14: Der Rücknahmeautomat befindet sich in einem Gebäude.

Punkt 15: Das Rücknahmesystem weist zumindest einen Zusatzrücknahmeautomat auf, der jeweils über ein zugeordnetes Zusatzleitsystem mit dem Aufnahmebehälter in Verbindung steht.

Punkt 16: Der Rücknahmeautomat weist zumindest eine Benutzerbedieneinheit auf, welche jeweils zumindest eine Annahmeeinrichtung zur Annahme zumindest einer Wertstofffraktion aufweist.

Punkt 17: Jede Benutzerbedieneinheit nimmt jeweils eine Wertstofffraktion entgegen.

Punkt 18: Jede Benutzerbedieneinheit nimmt jeweils mehrere Wertstofffraktionen entgegen.

Punkt 19: Das Rücknahmesystem weist einen Aufnahmebehälter auf, der einen Sammelbehälter enthält, und eine Benutzerbedieneinheit.

Punkt 20: Das Rücknahmesystem weist einen Aufnahmebehälter auf, der einen Sammelbehälter enthält, und mehrere Benutzerbedieneinheiten.

Punkt 21: Das Rücknahmesystem weist einen Aufnahmebehälter auf, der mehrere Sammelbehälter enthält, und eine Benutzerbedieneinheit.

Punkt 22: Das Rücknahmesystem weist einen Aufnahmebehälter auf, der mehrere Sammelbehälter enthält, und mehrere Benutzerbedieneinheiten.

Punkt 23: Das Rücknahmesystem weist mehrere Aufnahmebehälter auf, die jeweils einen Sammelbehälter enthalten, und eine Benutzerbedieneinheit.

Punkt 24: Das Rücknahmesystem weist mehrere Aufnahmebehälter auf, die jeweils einen Sammelbehälter enthalten, und mehrere Benutzerbedieneinheiten.

Punkt 25: Das Rücknahmesystem weist mehrere Aufnahmebehälter auf, die jeweils einen oder mehrere Sammelbehälter enthalten, und eine Benutzerbedieneinheit.

Punkt 26: Das Rücknahmesystem weist mehrere Aufnahmebehälter auf, die jeweils einen oder mehrere Sammelbehälter enthalten, und mehrere Benutzerbedieneinheiten.

Punkt 27: Die Aufnahmebehälter sind um den Rücknahmeautomat herum angeordnet.

Punkt 28: Das Wertstoffrücknahmesystem weist ein Wertstofferkennungs- und Selektiersystem zum Erkennen und sortenreinen Selektieren von Wertstoffen auf.

Punkt 29: Das Erkennungs- und Selektiersystem umfasst zumindest einen Eingang, der jeweils mit einer der Annahmeeinrichtungen verbunden ist, eine Wertstoffidentifiziereinrichtung, die mit dem zumindest einen Eingang verbunden ist, eine Wertstoffverteileinrichtung und zumindest einen Ausgang, der mit der Wertstoffverteileinrichtung verbunden ist, wobei die Wertstoffverteileinrichtung den zumindest einen Ausgang entsprechend der von der Wertstoffidentifiziereinrichtung vorgenommenen Erkennung des Wertstoffs beschickt.

Punkt 30: Ein Ausgang des Wertstofferkennungs- und Selektiersystems ist als Rückgabeeinrichtung für als falsch eingeworfen erkannte Wertstoffe vorgesehen.

Punkt 31: Die Erkennungs- und Selektiereinrichtung pro Wertstofffraktion einen Eingang, eine separate Einheit der Wertstoffidentifiziereinrichtung, einen Ausgang für als falsch eingeworfen erkannte Wertstoffe und einen Ausgang für als richtig eingeworfen erkannte Wertstoffe umfasst.

Punkt 32: Die Erkennungs- und Selektiereinrichtung umfasst zur Beschickung durch alle Benutzerbedieneinheiten eine als gemeinsame Einheit ausgeführte Wertstoffidentifiziereinrichtung, einen Ausgang für als falsch eingeworfen erkannte Wertstoffe, und jeweils einen Ausgang für als richtig eingeworfen erkannte Wertstofffraktionen.

Punkt 33: Jede Annahmeeinrichtung weist pro Wertstofffraktion, die sie entgegennimmt, einen Eingang auf, jeder Eingang ist jeweils an eine separate Einheit der Wertstoffidentifiziereinrichtung angeschlossen, von jeder separaten Einheit der Wertstoffidentifiziereinrichtung führt je ein Ausgang für als falsch eingeworfen erkannte Wertstoffe und ein Ausgang für jede als richtig eingeworfen erkannte Wertstofffraktion weg.

Punkt 34: Das Leitsystem steht einerseits mit denjenigen Ausgängen, die eine bestimmte Wertstofffraktion führen, und andererseits mit dem dieser Wertstofffraktion zugeordneten Sammelbehälter in Verbindung.

Punkt 35: Das Leitsystem liegt zumindest teilweise unterhalb der Höhe der Bodenoberfläche.

Punkt 36: Das Leitsystem ist als Förderbandanordnung ausgeführt.

Punkt 37: Das Leitsystem ist als Fallschachtanordnung ausgeführt.

Punkt 38: Das Leitsystem schliesst behälterseitig mit einer Rampe ab.

Punkt 39: Das Leitsystem ist durch mehrere Transportbandstrecken ausgeführt, die jeweils einen zugeordneten Sammelbehälter mit der entsprechenden Wertstofffraktion beschicken.

Punkt 40: Das Leitsystem ist durch zumindest eine Transportbandstrecke mit pro Wertstoff-Fraktion jeweils einem Abschnitt bestimmter Breite und einem unter Winkel zur Laufrichtung angebrachten Führungsanschlag ausgeführt, wobei ein Führungsanschlag jeweils eine Wertstoff-Fraktion in einen zugeordneten Sammelbehälter lenkt.

Punkt 41: Das Leitsystem weist ein in die Deckelkonstruktion innenseitig integriertes Fördersystem auf, insbesondere eine Förderbandanordnung, das den Transport der Wertstoffe im jeweiligen Aufnahmebehälter zum jeweils zugeordneten Sammelbehälter durchführt und im geschlossenen Zustand des Aufnahmebehälters mit dem Rücknahmeautomat in Verbindung steht.

Punkt 42: Das Fördersystem ist in die Stützstruktur der Deckelkonstruktion integriert.

Punkt 43: Das Fördersystem ist durch mehrere Transportbänder ausgeführt, die jeweils ein zugeordnetes Sammelbehältnis mit der entsprechenden Wertstoff-Fraktion beschicken.

Punkt 44: Das Fördersystem ist durch zumindest ein Transportband mit pro Wertstoff-Fraktionen jeweils einem Abschnitt bestimmter Breite und einem unter Winkel zur Laufrichtung angebrachten Führungsanschlag ausgeführt, wobei ein Führungsanschlag jeweils eine Wertstoff-Fraktion in ein zugeordnetes Sammelbehältnis lenkt.

Punkt 45: In den zumindest einen Aufnahmebehälter ist ein ansteuerbares Antriebssystem zum Öffnen der Deckelkonstruktion integriert.

Punkt 46: Das Wertstoffrücknahmesystem weist ein Volumenreduzierungssystem zum Reduzieren des Volumens der aufgenommenen Wertstoffe auf.

Punkt 47: Das Wertstoffrücknahmesystem weist ein Füllgradfeststellungssystem zum Feststellen des Füllgrads des Aufnahmebehälters auf.

Punkt 48: Das Wertstoffrücknahmesystem weist eine elektronische Steuerungseinheit zum Steuern des Betriebs des Wertstoffrücknahmesystems auf.

Punkt 49: Das Wertstoffrücknahmesystem weist ein Pfanderstattungssystem zum Rückerstatten eines Pfandes für die aufgenommenen Wertstoffe auf.

Punkt 50: Das Wertstoffrücknahmesystem weist eine Entwertungseinrichtung auf, mit der die zurückgenommenen Wertstoffeinheiten zerstört und damit entwertet werden können.

Punkt 51: Die Entwertungseinheit ist nachfolgend auf das Leitsystem vorgesehen.

Punkt 52: Der Rücknahmeautomat ist mit einem Werbeträger verkleidet.

Punkt 53: Der Werbeträger ist in Form einer Litfasssäule ausgebildet.

Punkt 54: Der Werbeträger ist in Form einer Plakatwand ausgebildet.

Punkt 55: Der Werbeträger weist eine hinterleuchtete Schautafel auf.

Punkt 56: Die Schautafel befindet sich in einem abschliessbaren Schaukasten.

Punkt 57: Der Rücknahmeautomat ist als gegenüber dem Werbeträger separates Einzelmodul im Werbeträger ausgeführt.

Punkt 58: Der Rücknahmeautomat ist im unteren Bereich des Werbeträgers ausgeführt.

Punkt 59: Der Rücknahmeautomat ist in Form einer vieleckigen Säule mit annähernd paralleler Deck- und Bodenfläche ausgeführt, und auf jeder seiner Seitenflächen kann eine Benutzerbedieneinheit angeordnet sein.

Punkt 60: Der Rücknahmeautomat bildet eine Automatenzeile, und die Benutzerbedieneinheiten sind nebeneinander angeordnet.

| 1 | Aufnahmebehälter |
|---|---|
| 11 | Gestänge |
| 110 | Schubgelenkgetriebeanordnung |
| 112 | Schlitten |
| 114 | Stoppvorrichtung |
| 118 | Längssymmetrieebene |
| 12 | Stossfuge |
| 13, 13a, 13b | Deckelkonstruktion |
| 13a, 13b | Deckel |
| 14a, 14b | Scharniere |
| 15 | Stützstruktur des Behälters |
| 16 | Stützstruktur der Deckelkonstruktion |
| 17 | Blecheinfassung |
| 170 | Ring |
| 18a, 18b | Querverstrebung |
| 19 | Gummidichtung |

| 3a, 3b, 3c, 3d | Sammelbehälter |
|---|---|

| 32 | Schachtsystem |
|---|---|

| 4 | Wertstofferkennungs- und Selektiersystem |
|---|---|
| 400 | Programmtastatur |
| 42; 42a, 42b | Wertstoffidentifiziereinrichtung |
| 42 | gemeinsame Wertstoffidentifiziereinr. |
| 42a, 42b | separate Wertstoffidentifiziereinr. |
| 43a, 43b, 43c | Eingänge |
| 44, 45a, 45b, 45c | Ausgänge |
| 44 | Rückgabeöffnung, bzw. -ausgang |
| 45Za, 45Zb | Ausgänge des Zusatzrücknahmeautomaten |
| 46 | Wertstoffverteileinrichtung |

| 5 | Leitsystem |
|---|---|
| 5a, 5b, 5c | Transportbänder (im Behälter) |
| 55 | Transportband zum Behälter |
| 56 | Fallschacht zum Behälter |
| 5Z | Zusatzleitsystem |
| 5Za, 5Zb | Transportbänder des Zusatzleitsystems |
| 55Z | Zusatztransportband zum Behälter |
| 50; 50a | Fördersystem |
| 51, 52, 53 | Abschnitt eines Transportbands |
| 51a, 52a, 53a | Führungsanschläge |
| 552a, 552b, 552c | im Deckel 13a ausgebildete Öffnungen |

| 9, 4 | Wertstoffrücknahmesystem |
|---|---|
| 9 | Rücknahmeautomat |
| 9Z | Zusatzrücknahmeautomat |

| 90 | Benutzerbedieneinheit(en) |
|---|---|
| 91 | Annahmeeinrichtung(en) |

| 60 | Entwertungseinrichtung |
|---|---|
| 61 | Pfanderstattungssystem |
| 70 | Werbeträger |
| 80 | Transportbehälter |
| 81 | Kranmechanismus |

| F | Flasche |
|---|---|

G    Gebäude
R    Rampe

X1    Einwurföffnung
X2    Verriegelung
X3    kippbare Einwurfsäule
X4    Einwurfkanal
X6    wasserdichter Gummibelag
X7    Zentrierung
X8    verschraubter Stahlcontainer
X9    Befüllung in der Mitte


**Patentansprüche**

1.  Wertstoffsammelsystem zum sortenreinen Sammeln von Wertstoffen mit
      zumindest einem Aufnahmebehälter (1), der mittels einer Deckelkonstruktion (13, 13a, 13b) verschließbar ist, und zumindest einen Sammelbehälter (3a, 3b, 3c) aufnimmt,
      einem Wertstoffrücknahmesystem (9, 4), das einen Rücknahmeautomaten (9) zur Annahme und Weitergabe von Wertstoffen in den zumindest einen Aufnahmebehälter (1) aufweist, in dem die Wertstoffe zwischengespeichert werden, **dadurch gekennzeichnet, dass**
      der Rücknahmeautomat (9) und der zumindest eine Aufnahmebehälter (1) als räumlich durch einen seitlichen Abstand voneinander getrennte, separate Einzelmodule ausgeführt sind, und
      der Rücknahmeautomat (9) über ein Leitsystem (5) mit dem Aufnahmebehälter (1) in Verbindung steht.

2.  Wertstoffsammelsystem nach Anspruch 1, **dadurch gekennzeichnet, dass**
      es Zusatzrücknahmeautomaten (9Z) aufweist, die jeweils über ein zugeordnetes Zusatzleitsystem (5Z) mit dem Aufnahmebehälter (1) in Verbindung stehen.

3.  Wertstoffsammelsystem nach Anspruch 1 oder 2, **dadurch gekennzeichnet, dass**
      der Rücknahmeautomat (9) zumindest eine Benutzerbedieneinheit (90) aufweist, welche jeweils zumindest eine Annahmeeinrichtung (91) zur Annahme zumindest einer Wertstofffraktion aufweist.

4.  Wertstoffsammelsystem nach einem der vorhergehenden Ansprüche, **dadurch gekennzeichnet, dass** der zumindest eine Aufnahmebehälter (1) als begehbarer Bodenbehälter ausgeführt ist.

5.  Wertstoffsammelsystem nach einem der vorhergehenden Ansprüche, **dadurch gekennzeichnet, dass**
      der Aufnahmebehälter (1) ein mittels einer Stützstruktur (15) verstärkter, unterirdisch eingebauter Bodenbehälter ist, und
      die Deckelkonstruktion (13, 13a, 13b) im wesentlichen auf Höhe der Bodenoberfläche liegt.

6.  Wertstoffsammelsystem nach einem der vorhergehenden Ansprüche, **dadurch gekennzeichnet, dass**
      das Leitsystem (5) zumindest teilweise unterhalb der Höhe der Bodenoberfläche liegt.

7.  Wertstoffsammelsystem nach einem der vorhergehenden Ansprüche, **dadurch gekennzeichnet, dass**
      der Rücknahmeautomat (9) oberhalb der Deckelkonstruktion (13, 13a, 13b) angeordnet ist.

8.  Wertstoffsammelsystem nach einem der vorhergehenden Ansprüche, **dadurch gekennzeichnet, dass**
      das Wertstoffrücknahmesystem (9, 4) ein Wertstofferkennungs- und Selektiersystem (4) zum Erkennen und sortenreinen Selektieren von Wertstoffen aufweist.

9.  Wertstoffsammelsystem nach einem der vorhergehenden Ansprüche, **dadurch gekennzeichnet, dass**
      das Leitsystem (5) als Förderbandanordnung (55, 5a, 5b, 5c) ausgeführt ist.

10. Wertstoffsammelsystem nach einem der vorhergehenden Ansprüche, **dadurch gekennzeichnet, dass**
      das Leitsystem (5) durch zumindest eine Transportbandstrecke mit pro Wertstoff-Fraktion jeweils einem Abschnitt (51, 52, 53) bestimmter Breite und einem unter Winkel zur Laufrichtung angebrachten Führungsanschlag (51a, 52a, 53a) ausgeführt ist, wobei ein Führungsanschlag (51a, 52a, 53a) jeweils eine Wertstoff-Fraktion in einen zugeordneten Sammelbehälter (3a, 3b, 3c) lenkt.

11. Wertstoffsammelsystem nach einem der vorhergehenden Ansprüche, **dadurch gekennzeichnet, dass**
das Leitsystem (5) ein in die Deckelkonstruktion (13, 13a, 13b) innenseitig integriertes Fördersystem (50; 50a) aufweist, insbesondere eine Förderbandanordnung, das den Transport der Wertstoffe im jeweiligen Aufnahmebehälter (1) zum jeweils zugeordneten Sammelbehälter (3a, 3b, 3c, 3d) durchführt und im geschlossenen Zustand des Aufnahmebehälters (1) mit dem Rücknahmeautomat (9) in Verbindung steht.

12. Wertstoffsammelsystem nach Anspruch 11, **dadurch gekennzeichnet, dass**
die Deckelkonstruktion (13, 13a, 13b) innenseitig mittels einer gitterartigen Stützstruktur (16) verstärkt ist und das Fördersystem (50; 50a) in die Stützstruktur (16) der Deckelkonstruktion (13, 13a, 13b) integriert ist.

13. Wertstoffsammelsystem nach Anspruch 11 oder 12,
**dadurch gekennzeichnet, dass**
das Fördersystem (50; 50a) durch zumindest ein Transportband mit pro Wertstoff-Fraktion jeweils einem Abschnitt (51, 52, 53) bestimmter Breite und einem unter Winkel zur Laufrichtung angebrachten Führungsanschlag (51a, 51b, 51c) ausgeführt ist, wobei ein Führungsanschlag (51a, 51b, 51c) jeweils eine Wertstoff-Fraktion in ein zugeordnetes Sammelbehältnis lenkt.

14. Wertstoffsammelsystem nach einem der vorhergehenden Ansprüche, **dadurch gekennzeichnet, dass**
in den zumindest einen Aufnahmebehälter (1) ein ansteuerbares Antriebssystem zum Öffnen der Deckelkonstruktion (13, 13a, 13b) integriert ist.

15. Wertstoffsammelsystem nach einem der vorhergehenden Ansprüche, **dadurch gekennzeichnet, dass**
das Wertstoffrücknahmesystem (9, 4) eine elektronische Steuerungseinheit zum Steuern des Betriebs des Wertstoffrücknahmesystems (9, 4) aufweist.

16. Wertstoffsammelsystem nach einem der vorhergehenden Ansprüche, **dadurch gekennzeichnet, dass**
das Wertstoffrücknahmesystem (9, 4) ein Pfanderstattungssystem zum Rückerstatten eines Pfandes für die aufgenommenen Wertstoffe aufweist.

17. Wertstoffsammelsystem nach Anspruch 16, **dadurch gekennzeichnet, dass**
das Wertstoffrücknahmesystem (9, 4) eine Entwertungseinrichtung (60) aufweist, mit der die zurückgenommenen Wertstoffeinheiten zerstört und damit entwertet werden können und
die Entwertungseinheit (60) nachfolgend auf das Leitsystem (5) vorgesehen ist.

18. Wertstoffsammelsystem nach einem der vorhergehenden Ansprüche, **dadurch gekennzeichnet, dass**
der Rücknahmeautomat (9) mit einem Werbeträger (70) verkleidet ist.

19. Wertstoffsammelsystem nach Anspruch 19, **dadurch gekennzeichnet, dass**
der Werbeträger (70) in Form einer Litfasssäule ausgebildet ist.

20. Wertstoffsammelsystem nach einem der vorherigen Ansprüche, **dadurch gekennzeichnet, dass**
der Rücknahmeautomat (9) in Form einer vieleckigen Säule mit annähernd paralleler Deck- und Bodenfläche ausgeführt ist, und auf jeder seiner Seitenflächen eine Benutzerbedieneinheit (90) angeordnet sein kann.

21. Baugruppe zum Nachrüsten eines aus einem Rücknahmeautomaten (9) mit einem integrierten Wertstofferkennungs- und Selektiersystem (4) bestehenden Wertstoffrücknahmesystems (9, 4) auf ein Wertstoffsammelsystem gemäss einem der Ansprüche 1 - 20.

**Claims**

1. Recyclable material collecting system for collecting unmixed categories of recyclable material, comprising at least one receiving container (1) capable of being closed by means of a lid structure (13, 13a, 13b), for receiving at least one collecting container (3a, 3b, 3c),
a recyclable material accepting system (9, 4) including an automatic accepting apparatus (9) for admitting and conveying recyclable materials into said at least one receiving container (1) for intermediate storage of said recyclable materials, **characterized in that**
said automatic accepting apparatus (9) and said at least one receiving container (1) are designed as separate individual modules spatially separated by a lateral space, and
said automatic accepting apparatus (9) communicates with said receiving container (1) via a guiding system (5).

2. Recyclable material collecting system in accordance with claim 1, **characterized in that**
it includes additional automatic accepting apparatuses (9Z) each communicating with said receiving container (1) via an associated additional guiding system (5Z).

3. Recyclable material collecting system in accordance with claim 1 or 2, **characterized in that**
said automatic accepting apparatus (9) includes at least one user operation unit (90) each having at least one admission means (91) for admission of at least one recyclable material fraction.

4. Recyclable material collecting system in accordance with any one of the preceding claims, **characterized in that**
said at least one receiving container (1) has the form of a walk-on ground container.

5. Recyclable material collecting system in accordance with any one of the preceding claims, **characterized in that**
said receiving container (1) is a ground container installed underground and reinforced by means of a support structure (15), and
said lid structure (13, 13a, 13b) is situated substantially on ground level.

6. Recyclable material collecting system in accordance with any one of the preceding claims, **characterized in that**
said guiding system (5) is at least partially located below ground level.

7. Recyclable material collecting system in accordance with any one of the preceding claims, **characterized in that**
said automatic accepting apparatus (9) is arranged above said lid structure (13, 13a, 13b).

8. Recyclable material collecting system in accordance with any one of the preceding claims, **characterized in that**
said recyclable material accepting system (9, 4) includes a recyclable material identifying and selecting system (4) for identifying recyclable materials and selecting unmixed categories thereof.

9. Recyclable material collecting system in accordance with any one of the preceding claims, **characterized in that**
said guiding system (5) has the form of a conveyor belt arrangement (55, 5a, 5b, 5c).

10. Recyclable material collecting system in accordance with any one of the preceding claims, **characterized in that**
said guiding system (5) is executed in the form of at least one length of conveyor belt having for each recyclable material fraction one respective portion (51, 52, 53) of a predetermined width and one guide stopper (51a, 52a, 53a) mounted at an angle with the moving direction, with one respective guide stopper (51a, 52a, 53a) directing one respective recyclable material fraction into an associated collecting container (3a, 3b, 3c).

11. Recyclable material collecting system in accordance with any one of the preceding claims, **characterized in that**
said guiding system (5) includes a conveyor system (50; 50a) integrated into the inside of said lid structure (13, 13a, 13b), in particular a conveyor belt arrangement for performing transport of the recyclable materials in the respective receiving container (1) to the respectively associated collecting container (3a, 3b, 3c, 3d), and in the closed condition of said receiving container (1) communicates with said automatic accepting apparatus (9).

12. Recyclable material collecting system in accordance with claim 11, **characterized in that**
said lid structure (13, 13a, 13b) is reinforced on the inside by a grid-like support structure (16), and said conveyor system (50; 50a) is integrated into said support structure (16) of said lid structure (13, 13a, 13b).

13. Recyclable material collecting system in accordance with claim 11 or 12, **characterized in that**
said conveyor system (50; 50a) has the form of at least one conveyor belt having for each recyclable material fraction one respective portion (51, 52, 53) of a predetermined width and a guide stopper (51a, 51b, 51c) mounted at an angle with the moving direction, with one respective guide stopper (51a, 51b, 51c) directing one respective recyclable material fraction into an associated collecting container.

14. Recyclable material collecting system in accordance with any one of the preceding claims, **characterized in that**
a controllable drive system for opening said lid structure (13, 13a, 13b) is integrated into said at least one receiving container (1).

15. Recyclable material collecting system in accordance with any one of the preceding claims, **characterized in that** said recyclable material accepting system (9, 4) includes an electronic control unit for controlling operation of said recyclable material accepting system (9, 4).

16. Recyclable material collecting system in accordance with any one of the preceding claims, **characterized in that** said recyclable material accepting system (9, 4) includes a deposit return system for reimbursing a deposit for the received recyclable material.

17. Recyclable material collecting system in accordance with claim 16, **characterized in that** said recyclable material accepting system (9, 4) includes invalidating means (60) whereby the accepted recyclable material units may be destroyed and thus rendered invalid, and said invalidating unit (60) is provided downstream from said guiding system (5).

18. Recyclable material collecting system in accordance with any one of the preceding claims, **characterized in that** said automatic accepting apparatus (9) is concealed by an advertisement carrier (70).

19. Recyclable material collecting system in accordance with claim 19, **characterized in that** said advertisement carrier (70) has the form of an advertising pillar.

20. Recyclable material collecting system in accordance with any one of the preceding claims, **characterized in that** said automatic accepting apparatus (9) has the form of a polygonal column having approximately parallel top and bottom surfaces, and on each one of its lateral surfaces a user operation unit (90) may be arranged.

21. Structural component for upgrading a recyclable material accepting system (9, 4) comprised of an automatic accepting apparatus (9) with an integrated recyclable material identifying and selecting system (4) into a recyclable material collecting system in accordance with any one of claims 1 - 20.

**Revendications**

1. Système de collecte de produits recyclables pour la collecte par catégories de produits recyclables, comprenant au moins une cuve de ramassage (1), qui peut être fermée au moyen d'un système de couvercle (13, 13a, 13b) et dans laquelle est logé au moins un collecteur (3a, 3b, 3c), un système de reprise des produits recyclables (9, 4), qui comporte un dispositif automatique de reprise (9) destiné à recevoir et à transférer les produits recyclables dans la au moins une cuve de ramassage (1), dans laquelle les produits recyclables sont stockés temporairement, **caractérisé en ce que** le dispositif automatique de reprise (9) et la au moins une cuve de ramassage (1) sont conçus sous forme de modules individuels séparés, écartés l'un de l'autre à une distance latérale donnée, et le dispositif automatique de reprise (9) est relié à la cuve de ramassage (1) par l'intermédiaire d'un système de guidage (5).

2. Système de collecte de produits recyclables selon la revendication 1, **caractérisé en ce qu'**il comporte des dispositifs automatiques de reprise supplémentaires (9Z), qui sont reliés chacun à la cuve de ramassage (1) par l'intermédiaire d'un système de guidage supplémentaire (5Z) associé.

3. Système de collecte de produits recyclables selon la revendication 1 ou 2, **caractérisé en ce que** le dispositif automatique de reprise (9) comporte au moins une unité de commande pour utilisateur (90), qui comporte au moins une unité de réception (91) destinée à recevoir au moins une fraction des produits recyclables.

4. Système de collecte de produits recyclables selon l'une quelconque des revendications précédentes, **caractérisé en ce que** la au moins une cuve de ramassage (1) est conçue sous forme de cuve de sol sur laquelle on peut marcher.

5. Système de collecte de produits recyclables selon l'une quelconque des revendications précédentes, **caractérisé en ce que** la cuve de ramassage (1) est une cuve enterrée dans le sol, renforcée par une structure de support (15) et le système de couvercle (13, 13a, 13b) est posé sensiblement au niveau de la surface du sol.

**6.** Système de collecte de produits recyclables selon l'une quelconque des revendications précédentes, **caractérisé en ce que** le système de guidage (5) est situé au moins en partie en dessous du niveau de la surface du sol.

**7.** Système de collecte de produits recyclables selon l'une quelconque des revendications précédentes, **caractérisé en ce que** le dispositif automatique de reprise (9) est agencé au-dessus du système de couvercle (13, 13a, 13b).

**8.** Système de collecte de produits recyclables selon l'une quelconque des revendications précédentes, **caractérisé en ce que** le système de reprise des produits recyclables (9, 4) comporte un système d'identification et de tri (4) des produits recyclables pour identifier les produits recyclables et les trier par catégories de produits.

**9.** Système de collecte de produits recyclables selon l'une quelconque des revendications précédentes, **caractérisé en ce que** le système de guidage (5) est réalisé sous forme de système à courroie de transport (55, 5a, 5b, 5c).

**10.** Système de collecte de produits recyclables selon l'une quelconque des revendications précédentes, **caractérisé en ce que** le système de guidage (5) est formé par au moins une courroie de transport avec un tronçon (51, 52, 53) de largeur définie pour chaque fraction de produits recyclables et par une butée de guidage (51a, 52a, 53a) disposée en angle par rapport au sens de défilement, une butée de guidage (51a, 52a, 53a) étant destinée à guider respectivement une fraction de produits recyclables vers un collecteur (3a, 3b, 3c) associé.

**11.** Système de collecte de produits recyclables selon l'une quelconque des revendications précédentes, **caractérisé en ce que** le système de guidage (5) comporte un système de transport (50 ; 50a) intégré sur le côté intérieur du système de couvercle (13, 13a, 13b), en particulier un système à courroie de transport, qui transporte les produits recyclables dans la cuve de ramassage (1) correspondante vers chacun des collecteurs (3a, 3b, 3c, 3d) associés et, dans la position fermée de la cuve de ramassage (1), est relié au dispositif automatique de reprise (9).

**12.** Système de collecte de produits recyclables selon la revendication 11, **caractérisé en ce que** le système de couvercle (13, 13a, 13b) est renforcé sur le côté intérieur par une structure de support (16) en forme de grille et le système de transport (50 ; 50a) est intégré dans la structure de support (16) du système de couvercle (13, 13a, 13b).

**13.** Système de collecte de produits recyclables selon la revendication 11 ou 12, **caractérisé en ce que** le système de transport (50 ; 50a) est formé par au moins une courroie de transport avec un tronçon (51, 52, 53) de largeur définie pour chaque fraction de produits recyclables et par une butée de guidage (51a, 51b, 51c) disposée en angle par rapport au sens de défilement, une butée de guidage (51a, 51b, 51c) étant destinée à guider respectivement une fraction de produits recyclables vers un collecteur associé.

**14.** Système de collecte de produits recyclables selon l'une quelconque des revendications précédentes, **caractérisé en ce qu'**un système d'entraînement à commande, destiné à ouvrir le système de couvercle (13, 13a, 13b), est intégré dans la au moins une cuve de ramassage (1).

**15.** Système de collecte de produits recyclables selon l'une quelconque des revendications précédentes, **caractérisé en ce que** le système de reprise de produits recyclables (9, 4) comporte une unité de commande électronique pour commander le fonctionnement du système de reprise des produits recyclables (9, 4).

**16.** Système de collecte de produits recyclables selon l'une quelconque des revendications précédentes, **caractérisé en ce que** le système de reprise des produits recyclables (9, 4) comporte un système de remboursement de consigne destiné à rembourser la consigne du produit recyclable repris.

**17.** Système de collecte de produits recyclables selon la revendication 16, **caractérisé en ce que** le système de reprise des produits recyclables (9, 4) comporte une unité de compostage (60), par laquelle les unités de produits recyclables repris sont compostées et peuvent donc être compostées et l'unité de compostage (60) est prévue en aval du système de guidage (5).

**18.** Système de collecte de produits recyclables selon l'une quelconque des revendications précédentes, **caractérisé en ce que** le dispositif automatique de reprise (9) est revêtu d'un support publicitaire (70).

**19.** Système de collecte de produits recyclables selon la revendication 19, **caractérisé en ce que** le support publicitaire (70) est conçu sous forme de colonne d'affichage.

**20.** Système de collecte de produits recyclables selon l'une quelconque des revendications précédentes, **caractérisé en ce que** le dispositif automatique de reprise (9) est conçu sous forme de colonne polygonale avec une face supérieure et une face inférieure pratiquement parallèles et une unité de commande pour utilisateur (90) peut être agencée sur chacune de ses faces latérales.

**21.** Groupe destiné à équiper ultérieurement un système de reprise de produits recyclables (9, 4), formé par un dispositif automatique de reprise (9) avec un système d'identification et de tri des produits recyclables (4) intégré, avec un système de collecte de produits recyclables selon l'une quelconque des revendications 1 à 20.

Fig. 1

EP 1 205 404 B1

Fig. 2

EP 1 205 404 B1

Fig. 3A

Fig. 3B

Fig. 4B

Fig. 4A

Fig 5

Fig. 6

Fig. 7A

Fig. 7B

Fig. 8A

Fig. 8B

Fig. 8C

Fig. 9A

Fig. 9B

FIG. 10

FIG. 11

QUERSCHNITT

FIG.12

EP 1 205 404 B1

FIG.13

EP 1 205 404 B1

FIG. 14a.

51a  52a  53a

51
52  } 50a
53

3a  3b  3c  1

FIG. 14b

5a
5b  } 50
5c

3a  3b  3c  1

_Fig. 15_

9
4
45a
5
F
55
R
120
3a
1

EP 1 205 404 B1

Fig. 16

EP 1 205 404 B1

## Fig.17

Fig. 18

Fig. 19

Fig.20

Fig. 21

Fig. 22